# EUROPEAN PATENT SPECIFICATION

(11) **EP 3 931 103 B1**
(45) Date of publication and mention of the grant of the patent: **20.12.2023**
(21) Application number: 20711314.3
(22) Date of filing: 14.02.2020
(51) Int. Cl.: B64F 1/00, B60L 53/80, B64C 39/02

(54) **METHOD FOR SUPPLYING OF ENERGY SOURCES TO UNMANNED VEHICLES AND SYSTEM FOR IMPLEMENTING SUCH METHOD**
VERFAHREN ZUR VERSORGUNG MIT ENERGIEQUELLEN FÜR UNBEMANNTE FAHRZEUGE UND SYSTEM ZUR DURCHFÜHRUNG DES VERFAHRENS
PROCÉDÉ DE FOURNITURE DE SOURCES D'ÉNERGIE À DES VÉHICULES SANS PILOTE ET SYSTÈME DE MISE EN OEUVRE D'UN TEL PROCÉDÉ

(30) Priority: 28.02.2019 LT 2019010
(43) Date of publication of application: 05.01.2022
(73) Proprietor: Robotopia UAB, 06227 Vilnius (LT)
(72) Inventor: ODINOKOV, Sergey, 06227 Vilnius (LT); SAMUOLIS, Linas, 09200 Vilnius (LT)
(74) Representative: Gerasimovic, Liudmila
(86) International application number: PCT/IB2020/051237
(87) International publication number: WO 2020/174306

(56) References cited:
- WO-A1-2016/019567
- WO-A1-2017/062418
- WO-A1-2018/136790
- US-A- 6 059 058
- US-A1- 2018 141 453
- US-B2- 10 124 688

## Description

### Field of the invention

The invention is related to the field of transport, more particularly for vehicles like unmanned aerial and ground vehicles and it relates to servicing of chargeable batteries for the unmanned vehicles.

### Background of the invention

For the purpose of this description unmanned vehicles are the vehicles, which do not require continuous control by a human operator.

Most designs of the existing unmanned vehicles involve manual replacement of sources of energy - the batteries. The known solutions related to automated providing of unmanned vehicles with energy sources are based either on automated charging of the batteries by the charging station without their replacement directly in the unmanned vehicle, or on a robotized transfer of the batteries between the unmanned vehicle and the charging station with the help of different kinds of manipulator devices or complex systems thereof.

The first type of the automated solutions is inefficient because the time of motion of the existing unmanned vehicles is comparable with the time spent for charging of their batteries Second type of the automated solutions are relatively expensive and have a common drawback inherent to the entire second type of the automated solutions, since when the complex robotized system is out of operation, the entire charging station becomes unsuitable for servicing of the unmanned vehicles.

Both of the mentioned approaches are based on the paradigm of passive batteries used in the unmanned vehicles, that is the batteries are unable to get into the unmanned vehicle on their own, leave the unmanned vehicle and move to the charging station and inside thereof. External force should be applied to move them in space.

Most of the known solutions for changing of batteries in the unmanned vehicles limit the workspace of the payload which is fixed on the unmanned vehicle or integrated therein, because in such solutions changing of batteries in the unmanned vehicle is performed, as a rule, from below. And if the design of the unmanned vehicle is such that changing of batteries in the unmanned vehicle is performed from above, this limits available open space above the vehicle required for antennas of navigation and communication equipment.

In many currently known solutions relating to the batteries of the unmanned vehicles, a significant energy for moving the batteries within the gravitational field of the Earth is required (either vertically or along the inclined plane).

The considered drawbacks restrict the possibilities of distribution and wide application of automated systems of the unmanned vehicles, for example, in agriculture and in other fields.

The solution under WO2017062418 describes the system for automated changing of passive batteries in the unmanned aerial vehicle, comprising the body, landing platform, universal mechanical manipulator and the central processor controlling the operation of the station. The batteries are transferred between the unmanned vehicle and charging slots of the charging station in special cartridges and using a special manipulator. The solution under WO2017062418 describes the universal cartridge for the batteries, which is suitable for the unmanned vehicles of various types.

The drawback is that the solution is based on a very complex mechanical system of the charging station, the operability of which - the fault tolerance of the system is low due to dependence on the key elements of the system, backing-up of which is not involved. Moreover, complex mechanical system of the charging station is suitable for the unmanned aerial vehicles only, but not for the unmanned ground vehicles.

Use of robotized manipulators in the charging station always means high costs of equipment of the charging station and the entire system. In this case, high energy consumption is required for automated transfer of passive batteries by a special manipulator.

It is not only the equipment of the charging station that is expensive here, but the operation process, for which the given equipment is developed, as well as servicing of the equipment of the charging station concerned, are also expensive and energy consuming.

Publication WO2016019567 is disclosing the system and the method for changing of passive batteries in the unmanned aerial vehicles. In this case the system is comprising the body, landing platform and the complex mechanical system in the form of a carrousel with the manipulator. This application emphasizes the critical issue of proper alignment of the unmanned vehicle on the landing platform for operation of the entire system.

The drawbacks of this technical solution are similar to those specified for the previous solution -a complex mechanical system of the charging station is claimed, the fault tolerance of which is low due to non-backed up key elements of the system.

Complex mechanical system of the charging station according to WO2016019567 is suitable for the unmanned aerial vehicles only, but not for the unmanned ground vehicles. Besides, the charging station limits the space under the unmanned aerial vehicle, and, therefore, limits the payload of the unmanned aerial vehicle.

US2016/038464 A1 is describing a system for changing of passive batteries in various unmanned vehicles (both ground and aerial) by the charging station having several charging slots and an automotive robotic platform, which transfers the batteries between the charging station and the unmanned vehicles. In this case the charging station is equipped with the manipulator transferring the batteries between the slots of the charging station and the robotic platform.

This solution involves common previously mentioned drawbacks - it is using a complex mechanical system of the charging station, the fault tolerance of which is low due to dependence on the non-backed up key elements of the system.

The patent application US2017/0129352 A1 discloses the charging station for the unmanned aerial vehicles with a complex mechanical part, in which the batteries are transferred between the unmanned aerial vehicle and the charging station.

The drawbacks of the given solution are comprising the complex mechanical system of the charging station, low fault tolerance of the charging station due to non-backed up key elements of the system, and suitability of the system for the unmanned aerial vehicles only.

WO2012/093233 describes a device for changing of containers with the batteries for the electrically driven vehicle and the station for changing of the above containers, where transfer of the batteries is performed horizontally and where it is necessary to apply a control unit for the container changing station. This unit controls transfer and alignment of the tray for the container, wherein the tray can be in the retracted position, storage position, recovery position and in the position of changing of the container with the batteries.

This technical solution for the device is further containing such elements like the container for the batteries and a frame. The solution is designed for comparatively large automotive vehicles, which are different from the unmanned vehicles in terms of their characteristics.

US patent US9551989 B2 is disclosing the method and the device for changing of batteries in the unmanned aerial vehicles with the help of the manipulator robot, where the device is comprising the landing platform, manipulator and charging station. Changing of batteries in the unmanned vehicle is performed by setting from above, and it does not limit the payload of the unmanned vehicle. The system of the charging station is relatively simple; it does not require any complex mechanical part.

The drawbacks of the given solution are related to use of the complex and non-backed up manipulator, and this involves the risk of losing operability. Also, the device for changing of batteries is designed for the unmanned aerial vehicles only. Moreover, changing the batteries from above, the structural composition of the navigation antennas in the unmanned aerial vehicle is limited and becomes more complex.

EP3098932 A1 is related to a robotic trolley moving passive batteries between various devices and the slots of the charging stations. This technical solution is more reliable because the design of the robot is relatively simple as compared with the aforementioned options, and the number of the same robots used can be more than one.

Nevertheless, overall reliability and productivity of the system is limited by the number of the robotic trolleys.

Necessity of a precise alignment of the robotic trolley with other elements of the system and complexity of design of the charging station, and, therefore, the costs of the system should be referred to the drawbacks of this device, and these drawbacks impede attaining of the desired technical result.

WO2014/209208 discloses the method and the device for changing of the batteries in the vehicle, where mobile platforms and the system of pushers are applied. A significant advantage of this technical solution, as compared with the above described ones, is that a horizontal motion of the sources of energy (batteries) is applied, that saves space under the transport vehicle. Moreover, horizontal motion of the batteries requires less amount of energy.

The drawbacks comprise a reduced fault tolerance of the system due to a limited number of moving platforms and pushers. Moreover, structure of the charging station, where a manipulator robot or other robots should be necessary for transfer of the batteries into the slots of the charging station, is not disclosed in the solution giving no opportunity to estimate its efficiency. In addition to the horizontal motion of the batteries, the solution also assumes motion of the batteries at an angle to the vertical axis that is related to high energy consumption by the device.

### Summary of the invention

The proposed technical solution is intended to solve such a problem as expanding the possibilities of supplying the unmanned vehicles with charged batteries ensuring operability and continuous use of the unmanned vehicles and reducing downtime thereof. To a large extent this problem arose due to the prevailing paradigm of passive batteries, resulting in the complexity of the automated systems for changing of the batteries in the unmanned vehicles and the prevailing trend for using at the charging stations of sophisticated robotic manipulators and the complexes thereof. Moreover, at the mentioned charging stations vertical transfer of the batteries to be changed is usually applied, requiring significantly more energy as comparing with transfer of batteries in horizontal direction. An object of the present invention is to provide a reliable, easy to maintain and inexpensive infrastructure for supplying the unmanned vehicles with charged batteries integrated into the motorized units.

To solve this technical objective, it is necessary to create such motorized units, which would be able of leaving the unmanned vehicle for charging and - when in the charged state - of integration into the unmanned vehicle on their own without participation of special manipulators; as well as to develop the appropriate route subsystem within the total system comprising both service stations and the unmanned vehicles to be used for motion of the above-mentioned motorized units. To overcome the above problems, the technical solution is proposed, characterized by the totality of features, set forth in the independent claims, with preferred embodiments being defined in dependent claims.

Method for supplying of energy sources to unmanned vehicles according to present invention is comprising transfer of batteries between slots of an unmanned vehicle and an external charging device and back, with charging thereof in the external charging device.

In the proposed method:
- batteries are integrated into motorized units, which are designed to autonomously move between the slots, enter the slots and leave them;
- where movement of each motorized unit is performed by forming and controlling a path of its motion to the destination slot,
wherein each path of the motorized unit comprises a sequence of at least two different states, selected from a group, comprising:
- a transit state, in which said motorized unit is being moved between the slots;
- a state of alignment, in which the motorized unit is being aligned its position relative to the slot, within which it is located;
- a connected state, in which the motorized unit is fixed in the aligned position relative to the slot, within which it is located, and possibility of the energy transfer between an energy circuit of the slot concerned and the batteries integrated into the motorized unit is provided; and
- a fixed disconnected state, in which the non-moving motorized unit in the disconnected state is present (or stays steady);
wherein the motorized unit ends its path in the connected or fixed disconnected state in the destination slot;
- providing the unmanned vehicle with energy sources is performed by at least one motorized unit with fully or partially charged batteries integrated into it, and which unit is in connected state in the slot of the unmanned vehicle;
- charging of the integrated batteries is performed in the motorized unit, which unit is in connected state in one of the slots of the charging device, being the device external relative to the unmanned vehicle.

A part of energy of the batteries, integrated into the motorized unit being in any of the states, and/or a part of energy supplied from the charging device to the motorized unit being in the connected state in the slot of the charging device, is preferably used for ensuring of functioning of the motorized unit itself.

One or more external charging devices are preferably grouped within a service station, where each of the charging devices of the service station might be configured to comprise one or more slots, and where more than one motorized unit can be located within the service station, wherein more than one motorized unit can be located in any of said states simultaneously.

Motorized units of one service station are preferably provided for not less than one unmanned vehicle and accessibility of at least one motorized unit with the charged batteries, integrated therein, is provided for each of the serviced unmanned vehicles.

Unmanned vehicles are preferably also able to transfer the motorized units from one service station to another one.

In the preferred embodiment of the proposed method, along with the batteries the motorized units are able to transfer a payload integrated therein. Besides, they are preferably capable of integrating of payload, designed for operation of the module(s) of the service station, into the motorized unit, and transferring said payload by the unmanned vehicle from one service station to another one.

The unmanned vehicle is preferably equipped with two or more slots, in which the motorized units can be in the connected state.

The motorized unit and/or the service station is preferably equipped with means for determining the location of the motorized unit within the service station, in order to form the path, and using the information obtained therefrom for both determining the location of the motorized unit and for tracking the dynamics of the passage by motorized unit of its path. In the preferred embodiment of present method, the information on location of the motorized unit is supplemented with other information on the actual state of the motorized unit, for example, with the information on the energy level in the integrated batteries.

Herewith contactless information exchange is performed between the motorized unit(s) and means of control of the service station and/or other motorized units within said service station.

The paths of the motorized units are preferably formed in a centralized manner, for example, by control means of the service station, based on the information on the state(s) of the motorized unit(s) of the service station, which information is obtained in the process of the centralized information exchange, for example, of the type "between control means of the service station and motorized units". Or the paths of the motorized unit are formed in a decentralized manner by the motorized units themselves by proper following the given traffic rules, taking into account the information on the actual state of the motorized units of the service station, obtained in the process of the group information exchange of the type "between motorized units" and/or "between control means of the service station and motorized units".

The path is formed and adjusted on the basis of the information on the actual states of the motorized units of the service station, obtained in the process of the centralized and/or decentralized information exchange.

In a variant of embodiment of proposed method the slots, in which a motorized unit can be in the connected state or in the fixed disconnected state are preferably additionally located in the nodes of the service station, determining for them a purpose other than supplying energy, including storage of the motorized units, diagnostics thereof and servicing of the payload.

The slots, between which the motorized unit is being moved, are preferably arranged within one and the same horizontal plane or they are arranged in several horizontal planes with the possibility of transferring the motorized unit from any of the horizontal planes to any another one. In the method the slots within each of the horizontal planes are arranged in the order providing for the rectilinear (straight line) motion of the motorized unit between them with possible turning from one rectilinear direction to the other one.

Said turning of the motorized unit and/or vertical transfer to other horizontal plane is preferably performed by using the turn-and-lift device, for which purpose the service station is equipped with one or more of such device(s).

The group of states of the motorized unit is preferably further comprising an emergency state, in which the motorized unit is unable of autonomous motion, alignment and/or setting into the connected state, or such actions would represent a danger for the service station or the motorized unit in general and/or for its separate nodes. For that purpose, the group of states is additionally comprising pushing the motorized unit in the emergency state off the route, used for motion by other motorized units, by one or more motorized units that are not in the emergency state.

The key object of the proposed solution is the system for supplying the energy sources to an unmanned vehicle by performing the above-described method, which system is comprising the means for transfer of the batteries between the slots of the unmanned vehicle and the charging device, external relative to the unmanned vehicle, and back.

The proposed system:
- is comprising stationary or mobile service stations for automatic servicing of and providing the unmanned vehicles with batteries and/or payloads;
- wherein said means for transfer are comprising one or more motorized units and the route subsystem of the service station, along which route(s) the motorized units with integrated therein batteries and/or payloads are moving autonomously between the slots;
- each slot is comprising a section of one of the routes of the route subsystem; wherein for moving of the motorized unit from one route to the other, the route subsystem being configured in such a manner, that one route is compatible with the other one, and the joint of both routes is passable for the motorized units.

The service stations of the proposed system are preferably modular, with possibility of combining the modules; each of these modules is ensuring the continuity of the route subsystem, wherein said service station is comprising at least a control module, an energy module, a parking or landing module, the charging module and a chassis.

The control module is preferably comprising a communication unit for communication with the control station, with the unmanned vehicles and, optimally, with the motorized units, and said module is able to control motion of the motorized unit(s) on the routes of the route subsystem, using the means for determining the location of the motorized unit(s).

The route subsystem is preferably further comprising the routes containing no slots, used for connection of the routes, containing the slots, and/or for provision of accessibility of any slot of the system by at least one motorized unit.

The route subsystem according to the proposed invention is preferably consisting of one or more horizontal routes located at one or several horizontal levels. Moreover, routes of one level of the route subsystem are straight and parallel to each other and/or angled to each other, for example, at the right angle.

The route subsystem is comprising one or more turn-and-lift devices, configured for changing the direction and/or changing of the horizontal level of motion of the motorized unit by means of turning and/or vertical motion of the motorized unit together with the section of the route in the route subsystem.

Such a turn-and-lift device is installed at crossing of the routes of the route subsystem and is comprising:
- shaft, on the vertical axis of which the points of crossing of the routes for at least two levels of the horizontal routes are disposed;
- cage, comprising the section of the route, optimally with the service slot, and designed for pivoting about the vertical axis and/or for vertical transfer inside of the shaft between different levels of the routes;
- set of the sensors, ensuring proper positioning of the cage relative to the routes leading to the turn-and-lift device;
- rotary actuator for the shaft, designed for turning the shaft with the cage;
- lift actuator for the cage, designed for vertical transfer of the cage inside of the shaft between the routes of different levels.

The routes of the route subsystem according to the proposed solution are preferably also suitable for simultaneous and independent motion of the payloads of the unmanned vehicle(s), which payloads are not integrated into the motorized units. In the preferred embodiment, the payload not integrated into the motorized unit is using an outer part of the rails of the routes of the route subsystem for its motion along the routes of the route subsystem.

Each route of the route subsystem is optimally representing a pair of rails of the fixed gauge, located within the same horizontal plane.

Said motorized units are preferably comprising a load carrying platform, upon which there are installed at least:
- batteries and, optionally, the payload;
- one or more docking units, designed for transportation of energy between the batteries and the energy circuit of the slot;
- one or more wheel drives, each driving one or several traction wheels, installed either on the platform or upon the wheel drive itself and ensuring the motion of the motorized unit along the route of the route subsystem;
- control means, for example, the control unit, which is controlling the autonomous motion of the motorized unit by controlling the wheel drives, and docking unit(s).

The platform of the motorized unit is further preferably equipped with one or more passive wheels, provided for resting of motorized unit on the routes of the route subsystem.

In the preferred embodiment, the motorized unit is located between the rails of the routes of the route subsystem and is supported by its passive wheels on the upper inner part of the rails, while the traction wheels are pressed to the lower inner part of the rails.

The platform of the motorized unit is further preferably equipped with guide elements, designated to simplify the alignment of the motorized unit in parallel to the route, and/or with limit stops, restricting the freedom of motion within the plane, which is perpendicular relative to the plane of the route.

The docking unit of the motorized unit is preferably comprising a system port with two or more electric contacts located on it, and a motorized clamping actuator setting the system port into motion, perpendicular relative to the direction of the route, and designated to ensure the proper fixation of the motorized unit within the slot in the connected state. The system port of the docking unit is comprising a mechanical aligning element, designated to ensure the proper positioning of the electric contacts relative to the electric contacts of the corresponding system port of the slot and/or reliable mechanical fixation of the motorized unit on the section of the route of the slot.

The motorized unit is preferably equipped with a built-in or external communication unit(s), providing for contactless communication with the devices and systems, which are external relative to the motorized unit.

The motorized unit is preferably equipped with a built-in or external means for determining its absolute and/or relative location within the route subsystem, such as tracking sensors or position sensors.

On the route section within the unmanned vehicle more than one slot are preferably located for the possibility of transfer by the unmanned vehicle of not less than one motorized unit with integrated payload in addition to the motorized unit with integrated batteries, supplying energy for the unmanned vehicle itself.

The payload integrated into the motorized unit is, for instance, a charging device of the charging module and/or the control module of the service station.

In the proposed solution the unmanned vehicle can be represented by both unmanned aerial vehicle and unmanned ground vehicle.

### Brief description of the drawings

The subject matter of the proposed technical solution is illustrated by the drawings.
Figure 1 shows an example of the infrastructure of the system for supplying of energy sources to unmanned vehicles.
Figure 2 shows the design of the motorized unit, where a) is the side view; b) is the top view; c) is the front or rear view; d) is an example of location of the payload.
Figure 3 shows the service slot, where a) is the side view; and b) is the bottom view;
while c) is the front or rear view.

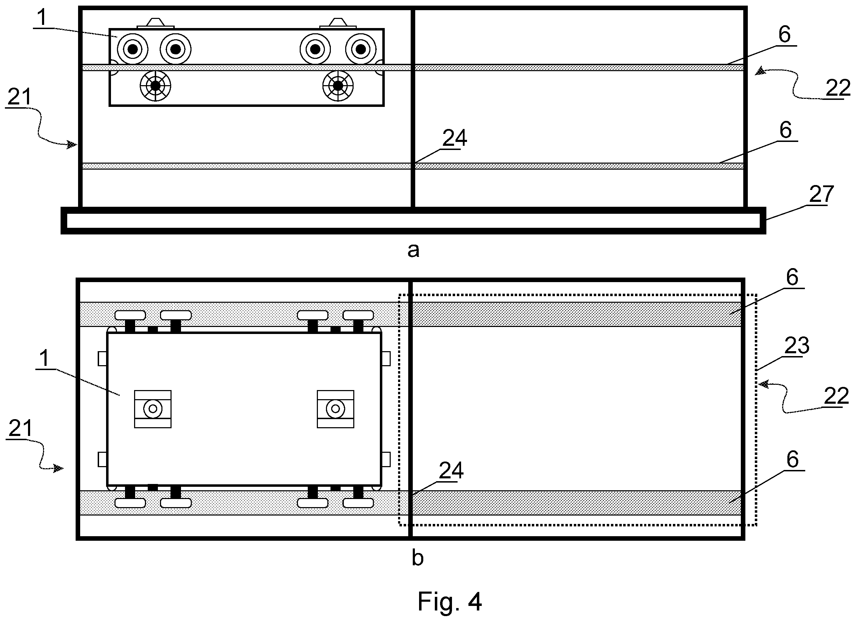

Figure 4 shows a two-level fragment of the route subsystem of the service station as an example of successive modules, where a) is the side view; and b) is the top view.
Figure 5 shows an example of the two-level charging modules with one service/ charging slot per level.
Figure 6 shows the turn-and-lift device (top view) on an example of crossing of the routes at the right angle: a) destination position of the cage of the turn-and-lift device, where the section of the route of the service slot of the cage becomes a continuation of the section of the route of the service station module; b) intermediate position of the cage of the turn-and-lift device.
Figure 7 shows the side view on an example of the device of the charging module for the motorized units with the batteries integrated therein, this device being based on the charging devices integrated as the payload into the motorized units.
Figure 8 shows an example of the unmanned vehicle with three service slots with the motorized units therein.
Figure 9 shows an example of the service station with one parking module and two charging modules.

### Modes of embodiments of the invention

Modes of embodiments of the invention are examples illustrating this invention, however not limiting its scope of protection.

### Description of the system infrastructure

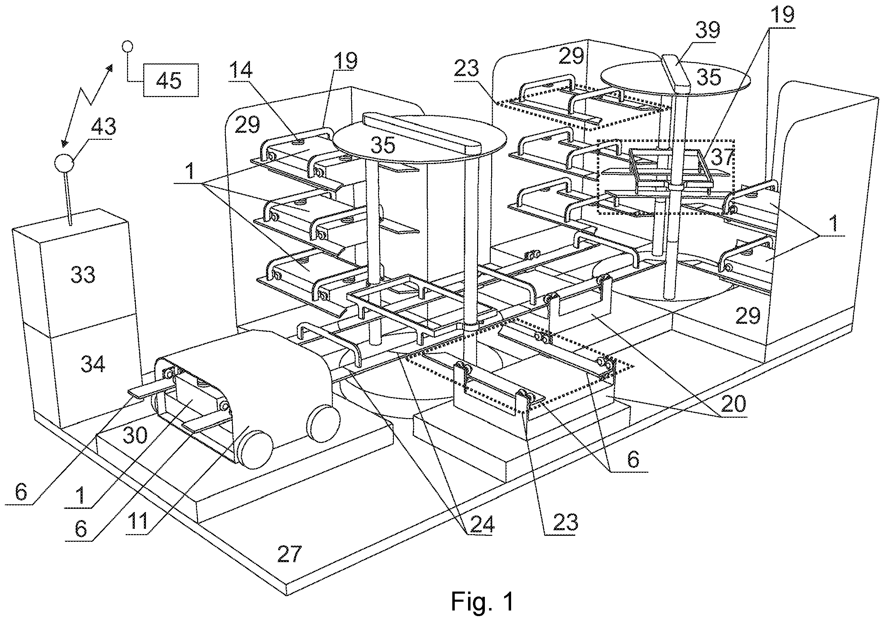

Fig. 1 shows schematically the infrastructure of the system according to the proposed invention, the key elements of which being the motorized units with the batteries and/or payloads integrated therein, the route subsystem and a number of modules of the service station. At the illustrated example provided rails 6 of the parked or landed unmanned vehicle 11 are joined with the rails of the parking module 30 with the possibility of motion of the motorized unit 1 both along the horizontal route of the route subsystem, and with possibility of turning or transfer between the levels, for example, to any of vacant slots of the charging modules 29 of the service station.

The motorized unit 1 (Fig. 1 and subsequent) is designed for supplying of electric power to the systems of the unmanned vehicle and/or for supplying the payload 20 installed on it, as well as for independent motion along the routes 23 of the route subsystem covering both the service stations and the unmanned vehicles.

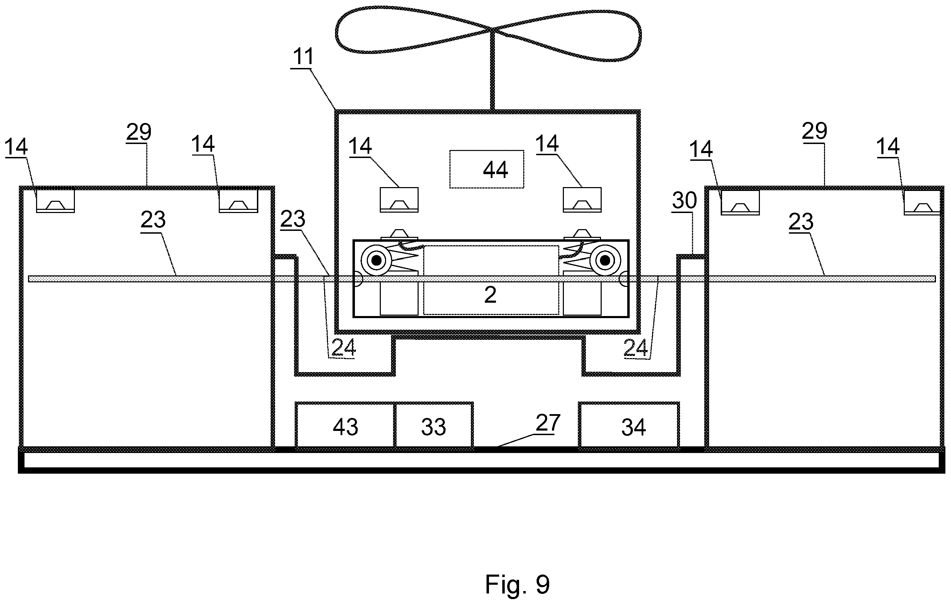

The route 23 (Fig. 9, Fig. 7, Fig. 1 etc.) is the basic unit of the route subsystem. The route 23 is represented by two rails 6, which are located in parallel to each other within one and the same horizontal plane, and distant from each other for a known track gauge. In its cross section the rail 6 can have a round, elliptic, rectangular or a more complex shape capable of withstanding static and dynamic loads created by the motorized units. The rails 6 of the route 23 are fixed to the body or the frame of the service station or the unmanned vehicle 11 by, for instance, bearing arches 19. The bearing arches 19 constitute a standardized element of the route subsystem and provide a highly precise gauge of the track between the rails 6, parallel running of the rails 6 and alignment of the rails 6 within one and the same horizontal plane.

The motorized unit 1 is comprising, at least, one or more batteries 2, the propulsion system, one or more docking units 46, control unit 9 and the platform 12 carrying all the above elements.

The batteries 2 are required for supplying electric power to the systems of the unmanned vehicle and/or the payload installed on it during motion of the vehicle. A part of energy is also consumed by internal systems of the motorized unit 1, and namely - by the propulsion system, docking units 46 and the control unit 9. The batteries 2 can be of any type, for example, NiMH, Li-ion, Li-Po, LiFePO4, LiFeMnPO4 and similar.

The propulsion system moves the motorized unit 1 along the route 23 in both forward and backward directions (forth and back).

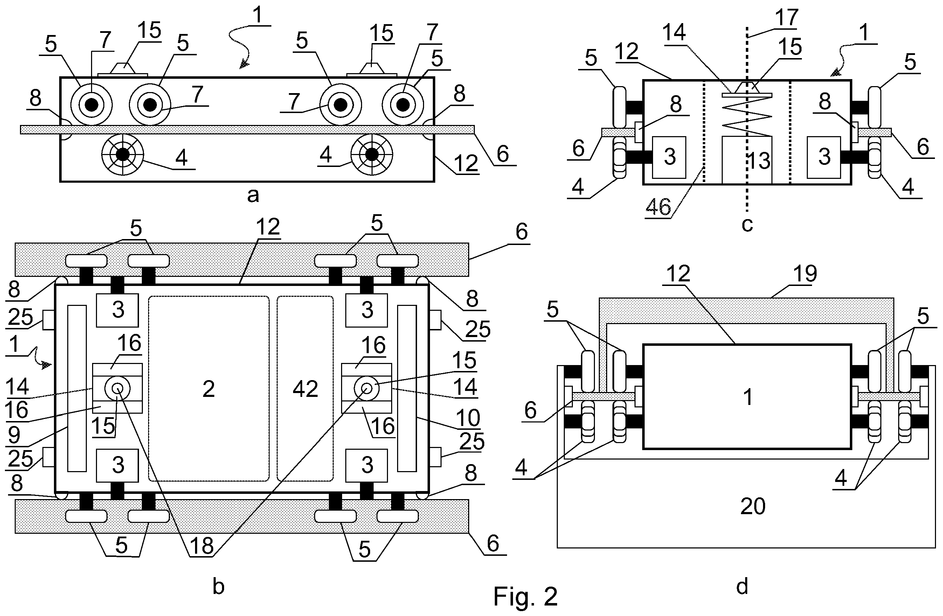

The propulsion system (Fig. 2) is comprising one or more wheel drives 3. The wheel drives 3 are required to rotate the traction wheels 4. Each wheel drive 3 of the propulsion system can be driven by a brush or brushless electric motor with or without a gearbox. To reduce the stress loads, the traction wheels 4 can be connected to the electric motor or the gearbox with a coupling.

Docking units 46 are equipped with the motorized clamping actuator 13 (Fig. 2c) driving the system port 14 into motion in the direction perpendicular relative to the direction of the route 23. The motorized clamping actuator 13 can be driven into motion by a brush or brushless electric motor with or without a gearbox.

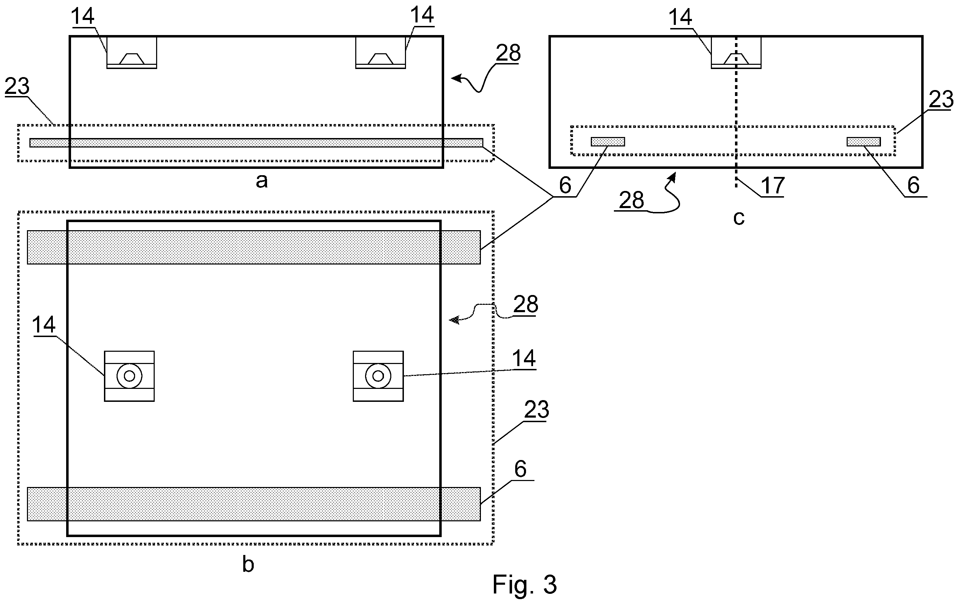

At connected position the docking units 46 provide a rigid and reliable fixation of the motorized unit 1 relative to the route 23 by pressing the unit against the route, while aligning elements 15 of system ports 14 of the motorized unit 1 are aligned with the corresponding aligning elements of system ports 14 of the service slot 28 of the service station or the unmanned vehicle (Fig. 3).

The slot is defined as a specified place in the unmanned vehicle or the charging devices, where autonomous fixation of the motorized unit is provided relative to the unmanned vehicle or the charging device, correspondingly. According to present invention, autonomous connection of the batteries integrated into the motorized unit with the energy circuit of the unmanned vehicle or the charging device correspondingly, is provided in each slot of the unmanned vehicle and in each slot of the charging device.

The clamping actuator 13 is a part of the docking unit 46. At joining the connection of electric contacts 16 of system ports 14 of the motorized unit 1 with electric contacts of system ports 14 of the service slot 28 is provided as well.

Direction of motion of the system port 14 can be vertical; then, at joining, the docking unit 46 is pressing the motorized unit 1 against the rails 6 of the route 23, providing a rigid and reliable fixation of the motorized unit 1 in the service slot 28 of the unmanned vehicle or the service station.

The control unit 9 is necessary for controlling the processes of charging, discharging and balancing of the batteries 2. The control unit 9 (Fig. 2b) controls supplying of energy for the systems of the unmanned vehicle and/or payload installed on it, as well as for the internal systems of the motorized unit 1. By controlling the propulsion system, control unit 9 controls motion of the unit 1 along the route infrastructure of the unmanned vehicle and the service stations; and also by controlling the docking units, it controls physical connection of the motorized unit 1 with the service slot 28 of the unmanned vehicle 11 or the service station. Functions of the control unit 9 are coordinated with the control station 45 via the communication unit 10 and/or optical communication channel using windows 18 for optical communication of the system port 14. Integrated or external relative to the control unit 9 communication unit 10 can be used for interaction of the control unit 9 with the unmanned vehicle motion controller 44.

The control unit 9 can comprise the unmanned vehicle motion controller 44 and other electronic units of the unmanned vehicle and/or its payload.

Platform 12 (Fig. 2) is the load-bearing part of the motorized unit 1 structure. The platform 12 can protect internal elements of the motorized unit from dust, dirt and/or moisture.

Two or more passive wheels 5 are fixed to the platform 12. The passive wheels 5 can be attached to the platform 12 using, for example, rolling-element bearings 7, preferably, ceramic or plastic in order to decrease total weight of the structure of the motorized unit 1, to reduce the friction force and to cut the amount of operation expenses.

The traction wheels 4 of the propulsion system are pressed against the rails 6 either by the weight of the motorized unit 1 or using a special clamping mechanism. Optimally, the traction wheels 4 can be pressed against the rails 6 of the route 23 from their bottom part, decreasing the load on the wheel drives 3 and providing a continuous contact between traction wheels 4 and the route 23. Besides, the bottom part of the rails 6 is less subjected to pollution.

Guide elements 8 (Fig. 2) can be installed on the platform 12 in order to decrease the side play of the motorized unit 1 between the rails 6. For example, rolling-element bearings 7 or fixed elements made of the materials with low value of the friction coefficient can be used as the guide elements 8. The guide elements 8 align the motorized unit 1 in parallel to the route 23 in the center of the route.

On the rails 6 of the route 23 the platform 12 is supported by the support wheels. The support wheels can be represented by only traction wheels 4, only passive wheels 5 or by a combination of traction and passive wheels. The support wheels bear all the weight of the motorized unit 1. The platform 12 may have the limit stops restricting the freedom of motion of the motorized unit 1 located in the route subsystem within the plane, which is perpendicular relative to the plane of the route 23.

Anti-shock dampers 25 used for damping possible collisions of motorized units 1 with each other and with the structures of modules of the service stations, can be installed at the sides of the platform 12 perpendicular relative to the route 23. The only case of a standard collision is represented by pushing of the motorized unit 1 in the emergency state by the one being not in emergency state in order to unblock the routes 23 of the route subsystem.

Rails 6 can be used for attaching to them and moving along them of the payload 20, which is not integrated into the motorized unit 1, with payload physically not interfering with motion of the motorized units 1 along the route subsystem. The motorized units 1 and the payloads 20 of the unmanned vehicles can move independently and simultaneously along one and the same route subsystem.

The route subsystem is configured for independent and parallel motion of the motorized units 1 and the payloads 20 on it.

The route subsystem may have several horizontal levels of the routes 23, wherein the routes 23 of the same level can be located at the angle relative to each other (for example, at the right angle).

Sections of the routes 23 of the unmanned vehicles and various modules of the service stations, all together forming the route subsystem according to present invention, can be made of different materials.

The motorized unit 1 moves along the routes 23 between the service slots 28.

The service slot 28 is a section of the route 23 with fixed and immobile relative to it system ports 14. The number and locations of the system ports 14 is such that the docking units 46 of the motorized units 1 could securely join the system ports 14 of the motorized units 1 and the service slot 28.

The system port 14 (Fig. 2) is comprising:
- a mechanical aligning element 15,
- two or more electric contacts 16,
- a possible window for optical communication 18, and
- optionally, the shutter, which automatically closes other elements of the system port 14 during the time when the motorized unit 1 is not in the service slot 28.

Aligning elements 15 precisely align the structures of the docked system ports 14 relative to each other and eliminate their mutual shifts in the directions, which are perpendicular relative to the direction of the axis of the system port 17 in the connected state. The electric contacts 16 are used for supplying electric power from the motorized unit 1 into the unmanned vehicle during motion of the unmanned vehicle, and also from an external source of energy into the motorized unit 1, for instance, from the charging device 32, while being charged in the charging module 29 of the service station in the motorized unit 1.

By means of windows 18 for optical communication, the control unit 9 can interact with the unmanned vehicle motion controller 44 or with the control module 33 of the service station. Otherwise, the motorized unit 1 can interact with the unmanned vehicle motion controller 44 or with the control module 33 of the service station by means of wireless communication via the communication unit 10 or via additional electric contacts 16 of the system port 14.

Payload 42 can be installed on the platform 12 of the motorized unit 1. In this case supplying of electric power to it is performed from the batteries 2 and/or from external sources via the electric contacts 16 of the system port 14.

Charging device 42a can be installed on the platform 12 of the motorized unit 1a. In this case electric contacts 16 of one of the system ports 14a are used for supplying it with electric power from external sources, while the electric contacts 16 of the other system port 14b are used for supplying energy for the system ports 14 of the slot of the charging station in order to charge the batteries 2 of another motorized unit 1 connected thereto.

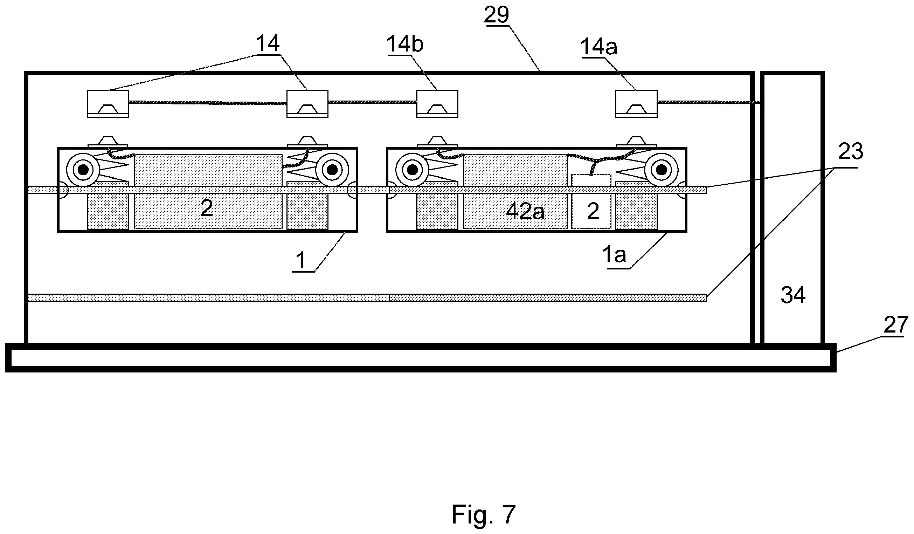

Fig. 7 shows the system port 14a connecting the system ports 14 of the charging module 29 to the charging device 42a, located in the motorized unit 1a, and the system port 14b, designed for supplying electric power for the charging device 42a in the motorized unit 1a.

Modules or parts of the modules of the service station, for example, the control module of the service station, can be installed on the platform 12 of the motorized unit 1.

System for embodiment of the method for supplying of energy sources to an unmanned vehicle comprises the service stations designed for automated servicing of parked or landed unmanned vehicles, payloads and the motorized units 1. The stations consist of separate modules and can be either fixed or mobile.

The modules of the service station (Fig. 1), within which motion of the motorized units 1 is foreseen, provide continuity of route subsystem on its section. The modules of the service stations can be combined together in order to obtain the service station with the desirable functions.

Main modules of the service stations are the following:
(1) chassis 27 is the load-bearing base of the service station;
(2) energy module 34 with the power bus for supplying power to other modules of the station;
(3) control module 33 of the service station;
(4) parking or landing module 30, in which the unmanned vehicle completes its motion, performs orientation in the proper direction and is fixed for required further operations, performed with the vehicle by other modules;
(5) turn-and-lift device, for example, an elevator 35 designed for turning of the motorized units 1 and their motion between the levels;
(6) charging module 29, designed for storing and charging the motorized units 1;
(7) module of the unmanned vehicles, designed for automated permanent or temporal, safe and compact storage of unmanned vehicles;
(8) module of the payloads, designed for permanent or temporal, safe and compact storage of the payloads 20.

Design of chassis 27 assumes quick installation of modules of the service station on the chassis. The chassis 27 can be manufactured of light aluminium profiles.

The said control module 33 of the service station:
- operates autonomously, but is controlled by the control station 45;
- contains the communication unit 43 used for communication with the control station 45, with the unmanned vehicles and, possibly, with the motorized unit(s) 1;
- controls operation of the entire service station and of modules of the service station separately;
- acts as a traffic controller for the route subsystem, namely controls motion of the motorized unit(s) 1 along the routes 23.

The tracking sensors or position sensors can be used in control module 33 of the service station.

The tracking/position sensors are used by the control unit 9 of the motorized unit 1. They are necessary for detecting location of the motorized units 1 in the route subsystem of the service stations and for precise aligning of the motorized unit 1 in the service slot 28 before docking. The tracking/position sensors can be of mechanical, optical, inductance type or of any other contact or contactless types.

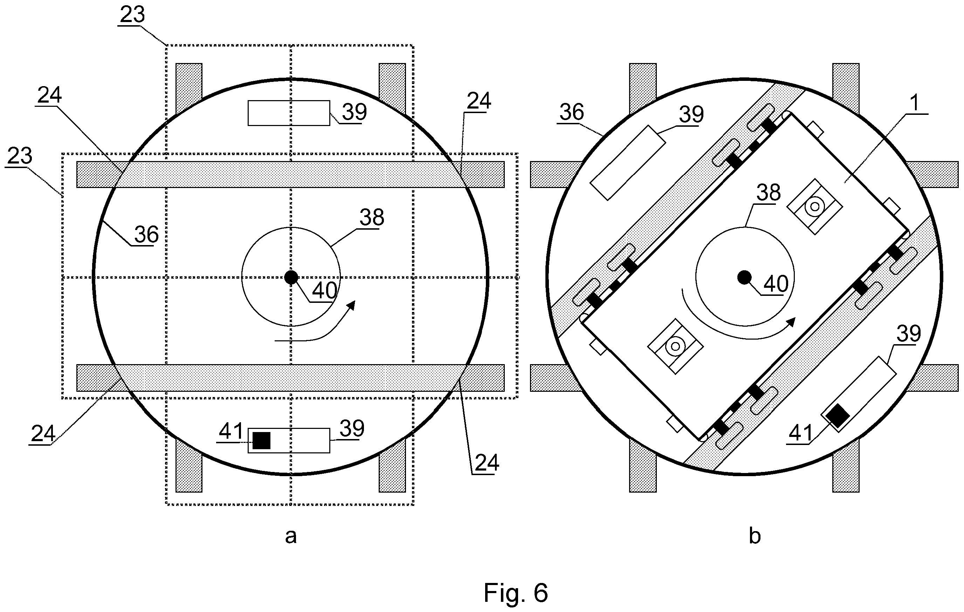

Design of the elevator 35 (Fig. 1, Fig. 6) comprises:
- the levels of the route subsystem, wherein each level consists of several routes 23 crossing in a point lying on one and the same for all the levels vertical axis 40 of the elevator;
- central elevator shaft 36;
- elevator cage 37, which moves vertically between the levels and pivots around the vertical axis 40. The cage 37 is comprising a section of the route 23, where the service slot 28 can be located in the central part of the section of the route 23 of the cage 37;
- a set of sensors providing proper alignment of the cage 37 relative to the routes 23 leading into the elevator 35;
- rotary actuator 38 for shaft, which rotates the shaft 36 with the elevator cage 37 and which can be pneumatic or electric;
- lift actuator 39 for elevator cage, which moves the cage 37 inside the elevator shaft 36 between the levels of the routes 23 of the elevator 35. The lift actuator for elevator cage may have a counter weight or constant force spring system 41 to reduce the load on the drive motor.

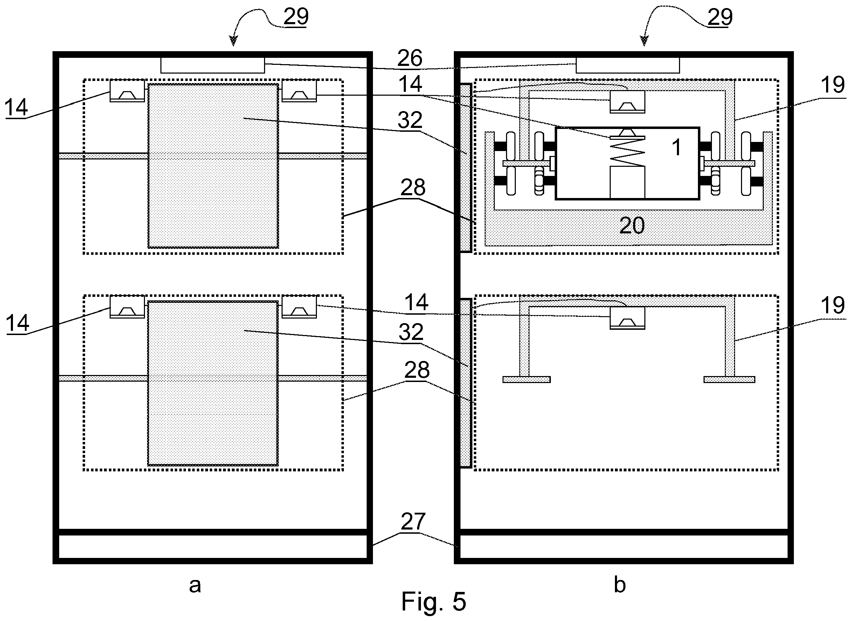

The charging module 29 of the service station (Fig. 1, Fig. 5) is located in such a manner, that it covers one or several levels of the routes 23, wherein one or several successive service slots 28 are located at every level, and the charging device 32 is connected to the system ports 14 of each of the service slots. The charging device 32 can interact with the control unit 9 of the motorized unit 1 through the optical communication channel, which is established via the windows 18 for optical communication of the system ports 14 or using wireless communication.

Ventilators or air conditioning system 26 can be installed inside of the charging module 32, providing the air inflow from outside and air circulation inside of the charging module.

Charging station (as one of the possible service stations) provides changing of at least one motorized unit 1 in the unmanned vehicle 11 parked or landed in the parking or landing module 30, and provides charging of the motorized units 1 located in the given charging station.

The charging station in any case comprises:
- chassis 27,
- control module 33 of the service station,
- energy module 34 of the service station,
- parking or landing module 30,
- charging module 29
- and elevator 35, in the case of a multilevel route subsystem of the service station.

### Description of embodiment of the method for supplying of energy sources to unmanned vehicles and operation of such system

Supplying unmanned vehicles with energy sources is performed by using the above-disclosed motorized units 1 (Fig. 1), capable of autonomous motion along the given path without participation of an external manipulator or similar robotized devices.

Here below is described an example of the method for supplying of energy sources to unmanned vehicle 11 with straight motion of the motorized unit 1 at several horizontal levels.

The straight-line motion is secured by the infrastructure of the straight routes with the slots located on part of them, or, in other words, by the route subsystem.

Correspondingly, the path of the motorized unit 1 is laid along the routes (on the routes), and the stages of this path, upon which the motorized unit is in its transit state (in the motion of the motorized unit relative to the route, on which the unit is located), are implemented at certain sections of the routes.

To describe any mode of embodiment of the method and the system according to present invention it is necessary to define some important basic states and actions (A to H).

### A. Unmanned vehicle in the service station (the state)

Unmanned vehicle 22 is equipped with its own straight section of the route 23, with one or several slots located on it.

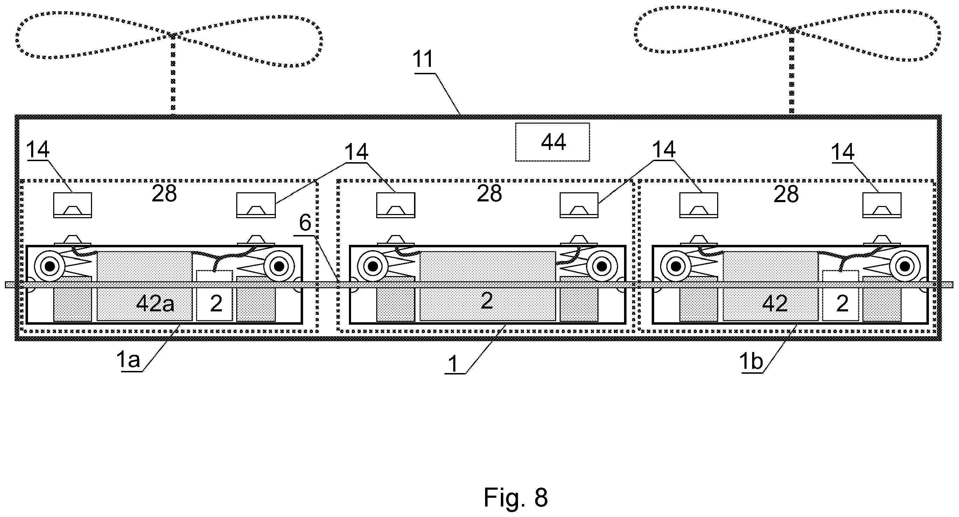

Fig. 8 shows an example of the unmanned vehicle 11 with three service slots 28 with the motorized units 1, 1a, and 1b.

The motorized unit 1a with integrated charging device 42a is located in the left-hand side slot; the motorized unit 1 with the batteries 2 for supplying electric power to the entire unmanned vehicle 11 is located in the central slot; and the motorized unit 1a with another integrated payload 42 is located in the right-hand side slot.

At proper parking of the unmanned vehicle in the landing module of the service station, matching of the straight section of the route of the unmanned vehicle with one of the routes within the service station is provided in such a manner, that the section of the route of the unmanned vehicle would become a continuation of at least one of the routes in the route subsystem of the service station. Therefore, the route of the properly parked unmanned vehicle becomes a part of the route subsystem of the service station.

Fig. 9 shows that section of the route 23 of properly parked unmanned vehicle 11, for example, the unmanned aerial vehicle, becomes a continuation of the route 23 of the landing module 30 and charging modules 29, and, therefore, becomes a part of the route subsystem of the service station.

### B. Motion between the levels (the action)

Motion between the levels is performed by the turn-and-lift device as follows:
A straight section of the route 23 of the turn-and-lift device 35 (Fig. 1, Fig. 6), as described above, satisfies the following condition: at rotation around the vertical axis of the elevator that section of the route can subsequently become a continuation of horizontal routes of the same level, located at an angle to each other and convergent in the point of crossing of the vertical axis of rotation 40 with the horizontal plane of this level of the route subsystem. In the process of vertical motion the section of the route can be transferred from one level, where the above condition is fulfilled, to the other level, where the above condition is also fulfilled.

### C. Motion of the motorized unit from the initial route to the other route of destination, which routes are convergent into the turn-and-lift device 35 at one level or at various levels (the action):

1) the section of the route 23 of the turn-and-lift device (elevator 35) is transferred to the level of the initial route, on which the motorized unit 1 is located;
2) the section of the route 23 of the turn-and-lift device 35 is rotated (Fig. 6b) in such a way, that it would become a continuation of the initial route;
3) the motorized unit is set to the transit state and moved completely to the section of the route 23, and then it is set to the fixed disconnected state;
4) the section of the route 23 (with the motorized power supply unit located on it) of the turn-and-lift device is transferred vertically to the level of the route of destination (if the level is different from the level of the initial route);
5) the section of the route 23 of the turn-and-lift device is rotated in such a way, that it would become a continuation of the route of destination;
6) the motorized unit is set to the transit state and moved from the section of the route 23 of the turn-and-lift device 35 to the route of destination.

It is important to note that:
- the above actions 1 and 2, as well as 4 and 5 can be performed in the turn-and-lift device either simultaneously or consequently;
- optimally, the actions 1 and 2 are performed in the turn-and-lift device in advance, in order to avoid waiting for completion of actions 1 and 2 by the motorized unit set to the fixed disconnected state on the initial route at the entrance to turn-and-lift device.

### D. Bringing motorized unit onto the route subsystem (the action)

1. From the parked unmanned vehicle:
   - the path from the slot of the unmanned vehicle to the destination slot is determined;
   - the motorized unit is set from the connected state in one of the slots of the unmanned vehicle to the fixed disconnected state;
   - the motorized unit is set to the transit state, and then it is moved from the section of the route of the unmanned vehicle to the route of the service station, the continuation of which the said section of the route of the unmanned vehicle has become;
   - further motion of the motorized unit is performed according to the remaining stages of the path.
2. Manually:
   - the motorized unit is installed on the (dead end) route of the service station and set to the fixed disconnected state;
   - the motorized unit is set to the transit state for the time period sufficient for determining its location within the route subsystem of the service station using the position sensors (either own and/or those of the service station);
   - the path to the slot of destination is determined;
   - subsequent motion of the motorized unit is performed according to the path.

### E. Connection with the slot:

- the motorized unit in the transit state is transferred to the slot of destination;
- the motorized unit is set to the fixed disconnected state;
- the motorized unit is set to the state of alignment, as the result it becomes aligned relative to and fixed at the destination slot;
- the motorized unit is set to the connected state, as the result it is provided with additional mechanical fixation of the motorized unit in the slot and with a connection of electric circuits of the motorized unit with the power circuits of the slot.

### F. Disconnection from the slot:

The motorized unit is set from the connected state to the fixed disconnected state.

### G. Charging:

- the path to the required destination slot in the charging device (for example, 32) is determined;
- if the motorized unit is in the slot, disconnection from the slot is performed;
- the motorized unit is transferred to the destination slot according to the given path;
- connection of the motorized unit with the required slot of the charging device is performed;
- the cycle of charging of the built-in sources of energy of the motorized unit is started in the charging device;
- the cycle of charging is completed in the charging device;
- the motorized unit is left in the slot in the connected state until its new path is determined.

Each of charging devices of the service station might comprise one or several slots. Minimally, the service station is formed of one charging device with one slot.

### H. Motion of the motorized unit along the path

Any path is laid between the initial slot and the destination slot, for example, between the slot of the unmanned vehicle and the charging slot of the service station. The infrastructure of straight routes 23, with the integrated destination slots (the service slots 28) located on them, provides a continuous motion along the path, and this infrastructure is called the route subsystem.

Motion of the motorized unit 1 is performed along the straight horizontal routes 23. There is an assigned certain section of the route 23 for each slot, on which the given slot is located. Unmanned vehicle is equipped with at least one section of the route 23 with one or several slots for supplying energy to the unmanned vehicle. Motion of the motorized unit 1 is restricted in such a manner, that it could not autonomously and completely leave the routes 23 of the service station or of the unmanned vehicle 11.

One or several routes 23 of the service station, as well as the route of the unmanned vehicle 11 are also used for the motion of the non-integrated payloads 20, simultaneous and independent from the motion of the motorized unit 1.

The slots of the same purpose are logically or physically grouped into the modules of slots; for example, charging module 29 of the service station (Fig. 1, Fig. 5) is comprising one or more charging slots, while the module for storage of the motorized units may comprise one or more slots for storage of the motorized units 1.

As shown in Fig. 5, the charging module 29 might comprise, for example, 2 service/charging slots 28 located on 2 horizontal levels. Design of modules of the service station, within which motion of the motorized units is foreseen, provides, as it is mentioned above, the continuity of infrastructure of the routes 23 on its own section.

Motion of every motorized unit 1 is performed by means of controlling the path of its motion between the slots and the sequence of its states.

Forming of the path is performed on the basis of the information received from the location detecting means of the motorized units within the service station, for example, from the aforementioned tracking sensors or position sensors.

Information about the last-known location or actual location of the motorized unit 1 together with the information about its state and, for example, the unique identifier of the motorized unit, jointly form the information about current state of the motorized unit.

Within the proposed system, the interaction between the motorized unit 1 in the connected state and the unmanned vehicle motion controller 44 and modules of the service stations, as said above, can be contactless or carried out via additional electric contacts 16 of the system port 14. Optimally, it is performed through the optical communication channel via the windows for optical communication 18 of the docked system ports 14; this method allows avoiding negative effects of the electromagnetic interference and does not require availability of additional electric contacts in the system port 14.

Motion of the motorized unit 1 along the path is controlled by the control unit 9, which interacts with the unmanned vehicle motion controller 44 or with the control module 33 of the service station.

In accordance with the proposed method, forming of paths and controlling of motion of the motorized units 1 are performed in a centralized manner - like the method applied by the railway traffic control; or in a decentralized manner - like controlling the motorway traffic by the rules applied for the road control.

The functions of control are coordinated with the control station 45.

Sequence of states of the motorized unit 1 is selected from the group of its states comprising:
- transit state, in which the motorized unit 1 is located between the slots of destination and is capable of autonomous moving between them along the infrastructure of the routes 23;
- state of alignment, in which, after arriving at the destination slot, the motorized unit 1 aligns its position relative to the slot and then fixes its position relative to the slot;
- connected state, in which the motorized unit 1 is fixed in the aligned position relative to the slot and provides connection of its electric contacts 16 to the electric contacts of the slot;
- fixed disconnected state, in which the motorized unit 1 appears after performing the state of alignment, after disconnecting from the slot or temporary termination of the transit state.

Aligned relative to the slot state means the state of the motorized unit 1, at which the mechanical aligning elements 15 of its system ports 14 are coaxial with the mechanical aligning elements 15 of the system ports 14 of the service slot 28.

To optimize consumption of the energy required for operation, the destination slots are located preferably within the horizontal plane in the order providing the straight motion of the motorized unit 1 between the slots. It is also possible to locate the slots within several horizontal planes with simultaneous provision for motion of the motorized unit 1 from any horizontal plane to any other one.

Motion of the motorized unit 1 from the route of departure to the route of arrival that requires a rotation within the horizontal plane or requires changing of the horizontal plane and/or transferring between parallel routes within one and the same horizontal plane, is provided by disconnecting the section of the route 23, on which the motorized unit 1 is located, from the route of departure and connecting the said section to the route of arrival. As the result, the moved section of the route becomes a continuation of the route of arrival.

Therefore, an advantageous in terms of energy consumption mostly horizontal motion of the motorized units 1 does not exclude the possibility of their motion, if necessary, between different horizontal planes and/or with turning within the horizontal plane.

Basic states, operations of charging, use of the elevator and other actions required for implementation of the method are explained by the following examples, illustrating present invention, however not limiting its scope of protection.

### An example of sequence of states of the motorized unit

The motorized unit 1 starts its motion from the slot of its initial location (for example, the slot for supplying energy to the unmanned vehicle) to the destination slot (for example, the service slot of the charging module 29), changing its connected state in the slot of the unmanned vehicle to the transit state by disconnecting from the slot for supplying energy to the unmanned vehicle and, correspondingly, disconnecting the electric contact between its contacts 16 and the contacts of the slot of the unmanned vehicle.

The transit state is characterized by the following conditions:
a) route subsystem of the service station and the unmanned vehicle is capable of providing continuous motion of the motorized unit between the slot of its initial location and the slot of destination;
b) the path from the slot of initial location to the slot of destination is determined;
c) charge level of or energy stored in batteries 2 of the motorized unit 1 is sufficient for performing motion to the destination slot;
d) the motorized unit 1 securely rests upon the route 23, wherein:
   - number of support wheels of the motorized unit 1 is sufficient for keeping a stable horizontal alignment of the motorized unit 1 on the route 23;
   - at least one traction wheel 4 of the platform 12 is securely resting on the route 23;
   - clamping actuator 13 is in the state, at which the system ports 14 of the motorized unit 1 are not docked or interfered with any of the system ports of the service slots 28.

While in the transit state, the motorized unit 1 moves forward or backward from one service slot to the other.

The control unit 9 of the motorized unit 1 controls start of the motion, stopping, speed and acceleration of the motion by controlling the wheel drives 3. The control unit 9 synchronizes the state of the motorized unit 1 and its location within the infrastructure of the routes 23 with the control module 33 of the service station using the communication unit 10, optimally, via a wireless communication channel.

Motion from one service slot to the other without any intermediary stops during the motion - with one section of acceleration, one subsequent section of transit at a constant speed and one subsequent section of deceleration - is considered to be the optimal one.

Optimally, the speed at the section of deceleration is lower than that at the section of acceleration, because low speed of motion is desirable for precise alignment of the motorized unit 1 in the service slot 28.

### The state of alignment (for example, in the service slot 28 of the charging module 29):

After performing orientation of the motorized unit 1 in such a manner, that the axes 17 of system ports 14 of the motorized unit 1 would match the corresponding axes 17 of the system ports of the service slot 28 (Fig. 2c), on the section of the route of which the motorized unit 1 is located, the control unit 9 terminates motion of the motorized unit 1 and activates the clamping actuators 13, which perform docking of the system ports 14 of the motorized unit 1 with the system ports 14 of the service slot 28 at the end of the action concerned.

### Connected state

The motorized unit 1 docked in the service slot 28 is securely fixed in and aligned to the slot on the route 23. This state of the motorized unit is called the connected state. At that, the connection of electric contacts 16 of the motorized unit 1 with the electric contacts of the service slot 28 is provided.

To set to a new transit state, for example, after completion of the charging process, the control unit 9 drives the clamping actuators 13 into the reverse motion, that causes disconnection of system ports 14 of the motorized unit 1 from the system ports 14 of the service slot 28, in which the motorized unit 1 has been in a connected state. The slots, in which the motorized unit 1 can be in the connected state, are located not only in the unmanned vehicle and the charging device 32, but also in other nodes of the service station. The designation other than charging and supplying energy for the unmanned vehicle can be defined for such slots, and this designation may comprise storage of the motorized units, diagnostics of the motorized units, payload etc.

More than one motorized unit can be simultaneously present in any of the above states within the limits of the service station.

### Process of charging of motorized units

Optimally, total number of the slots in the charging devices 32 and total number of the motorized units 1 located within the limits of the service station are defined in such a manner, that at least one motorized unit 1 with fully charged and integrated into it batteries 2 would be accessible for each of the unmanned vehicles serviced by the service station.

Default state: the motorized unit 1 is in the connected state in one of the service slots 28 of the unmanned vehicle, and the charging device 32 of the destination service slot of the charging module 29 (for example, Fig. 5) is switched off. The control unit 9 of motorized unit 1 receives from the control module 33 of the service station the path for motion to the destination service slot 28 of the charging module 29.

The motorized unit 1 is set to the transit state and starts its motion along the path.

Upon arrival at the destination service slot, the motorized unit 1 is aligned in it and set to the connected state.

The control module of the charging module 29 of the service station activates the charging device 32 of the destination service slot.

The control unit 9 of the motorized unit 1 starts the process of charging for the batteries 2, synchronizing the parameters of current state of charging with the control unit module of the charging module 29 of the service station.

When the batteries are fully charged, the control unit 9 terminates the process of charging. The motorized unit 1 can continue receiving energy from the charging device 32 for supplying power to the control unit 9 of the motorized unit.

### Using of the elevator

Alignment of the motorized unit 1 on the corresponding section of the route 23, fitting into the general infrastructure, rotation of the section of the route 23 together with the motorized unit 1 located on it, as well as vertical motion of this section of the route 23 to another horizontal level, are optimally performed by means of the turn-and-lift device 35, for example, in the form of a specially designed elevator, for which purpose the service station is equipped with one or more of such devices. Operating principle of the elevator 35, for example, during turning at the right angle, is clearly illustrated in Fig. 6.

Default state: the motorized unit 1 is in the transit state on one of the routes 23 adjacent to the elevator 35, and the elevator 35 is set to vacant state.

The control module of the elevator 35 receives from the control module 33 of the service station an instruction on servicing of the motorized unit 1. The lift is set to occupied state.

By controlling the lift actuator for elevator cage 39 and the rotary actuator 38 for shaft, the control module of the elevator performs orientation of the elevator cage 37 in a way, that its section of the route 23 would become a continuation of the route 23, on which the motorized unit 1 is located (the route of arrival).
- motorized unit 1 enters onto the section of the route 23 of the elevator cage 37 and stops in the service slot of the cage 37. The motorized unit 1 is set aligned and ready to be set to connected state.

By controlling the lift actuator 39 for elevator cage and the rotary actuator 38 for shaft the control module of the elevator 35 performs orientation of the elevator cage 37 in such a way, that its section of the route would become a continuation of the route 23, on which the motorized unit 1 has to be located (the route of departure).

The motorized unit 1 changes its state from the connected state in the elevator cage 37 to the transit state and leaves the section of the route of the elevator cage. The elevator becomes vacant.

### Changing of the motorized unit in the unmanned vehicle

Default state - the unmanned vehicle is securely fixed in the proper location in the parking or landing module 30 of the service station, the route 23 of the unmanned vehicle joins two sections of the route of the parking or landing module 30 of the service station, the motorized unit 1 with discharged batteries is in the connected state in the service slot of the unmanned vehicle, the charged motorized unit 1 in the transit state is located on one of two routes, adjacent to the parking or landing module 30, and the section of the opposite route is vacant.

The discharged motorized unit 1 in the unmanned vehicle 11 is set to the transit state and leaves the route of the unmanned vehicle towards the vacant section of the route 23; the service slot of the unmanned vehicle 11 is released and becomes occupied by the charged motorized unit 1 entering it from the opposite side. Then, the motorized unit 1 is aligned in the service slot of the unmanned vehicle 11 and is set to the connected state.

The unmanned vehicle is ready for receiving energy from the motorized unit located in its service slot.

### Pushing of motorized units in emergency state

In addition to the above-mentioned states, the motorized unit 1 might appear to be in emergency state, when it is incapable of autonomous motion, alignment and/or setting into the connected state, for example, due to absence of the required for the above operations energy in the batteries 2, integrated into the motorized unit 1.

To prevent forming traffic jams on the routes it is envisaged that the motorized unit 1 in the emergency state is to be pushed off the section of the route 23, used for motion of other motorized units, by one or several motorized units not in emergency state to that section of the routes of the service station, on which this motorized unit 1 in the emergency state would not interfere with motion of the motorized units not in emergency state. Such sections of the routes are called the emergency dead ends, and the service station is equipped with one or more of such emergency dead ends.

For the above purpose, the routes 23 of at least one level of the service station are equipped with one or more emergency dead ends comprising at least one service slot each.

One or several motorized units not in emergency state can push off the motorized unit in emergency state 1 blocking the route 23 of one of the levels of the service station, and, therefore, provide further functioning of the service station and reliable uninterrupted supply of charged motorized units for the unmanned vehicles.
1. For that purpose one or several motorized units 1 not in emergency state leave their service slots and approach the motorized unit in emergency state from the side opposite to the service slot of the emergency dead end, and push the motorized unit in emergency state until it reaches the dead end position. Then the motorized units 1 not in emergency state get back to their initial service slots or continue their motion along the assigned path moving, for example, into vacant service slots 28 of the charging module 29 of the service station for recharging.
2. Elevator 35 can also be used to move the motorized unit 1 in emergency state. In this case, one or several motorized units 1 not in emergency state leave their initial service slots and approach the motorized unit in emergency state from the side, opposite to the service slot of the cage 37 of the elevator and then push the motorized unit in emergency state until it reaches its destination location in the cage 37. Then the elevator 35 moves the cage 37 to the position, where the route 23 of the cage becomes a continuation of the route leading to the dead end. Subsequent actions correspond to those described in paragraph 1 above.

Advantages of the proposed method and system and proof of the solution of the problem. The proposed technical solution:
- provides the appearance and industrial implementation of the automotive motorized units, which are capable of:
   (a) autonomous motion along the route subsystem of the service stations,
   (b) autonomous entering the unmanned vehicles and leaving them,
   (c) autonomous docking with the system ports of both the service stations and the unmanned vehicles,
   (d) carrying additional payload on themselves;
- provides simplicity and optimal price of the route subsystem and, therefore, of the service stations,
- provides optimal design and good serviceability of the service slots of both modules of the service stations and of the unmanned vehicles;
- does not require any complex manipulators and robotized systems for servicing of the motorized units in the service stations, and that means reducing of costs of the service stations and decreasing the risk of failure for the systems used for servicing of the motorized units;
- reduces maintenance of the system to primarily servicing of compact standardized motorized units, and does not require servicing of the complex robotics of the service stations;
- increases the fault tolerance of the entire system by applying backed-up system ports for connection of the motorized unit to the unmanned vehicle and modules of the service stations;
- provides a modular design of service stations, higher flexibility in the process of their designing and good interchangeability due to simplicity of the route subsystem;
- provides small weight and simplicity of the service stations, and, therefore, their mobility, low price and possibility of servicing by non-qualified personnel without applying additional equipment and tools;
- provides servicing of the motorized units without disassembling the payload since independent movement is ensured to the motorized units and non-integrated payloads;
- does not limit the workspace used for the payload;
- further increases reliability of the entire system because of the assumed possibility of pushing of the motorized unit in emergency state by one or several ones not in emergency state to the dead-end section of the route subsystem, in which dead end the motorized unit in emergency state would not limit the motion of the units not in emergency state;
- allows moving the payload of the unmanned vehicles in parallel and independently within one and the same route subsystem used for motion of the motorized units;
- allows upgrade to more sophisticated and future types of batteries without altering the entire system;
- the solution allows to dynamically set up service stations with expensive charging and other equipment for the time of active use thereof, as well as to dismantle the above equipment from the service station for the time of temporary closing-down or a seasonal downtime by moving that equipment as payloads of unmanned vehicles.

### Industrial applicability

The proposed technical solution can find application both in the field of agriculture and in other fields of industry where it might occur a necessity of using the unmanned vehicles in the continuous mode with minimum downtime periods.

### List of positions:

- 1: Motorized unit:
1a - motorized unit with an integrated charging device;
1b - motorized unit with an integrated payload except charging device;
- 2: Battery
- 3: Wheel drive
- 4: Traction wheel
- 5: Passive wheel
- 6: Rail
- 7: Rolling-element bearing
- 8: Guide element
- 9: Control unit
- 10: Communication unit
- 11: Unmanned vehicle
- 12: Platform
- 13: Clamping actuator
- 14: System port:
14a - system port for supplying energy to charging device 42a in motorized unit 1a;
14b - system port for interconnecting system ports 14 of charging module 29 with a charging device integrated into motorized unit 1a;
- 15: Aligning element
- 16: Electric contact
- 17: Axis of system port
- 18: Window for optical communication
- 19: Bearing arch
- 20: Payload (except integrated into motorized unit)
- 21: Module 1 of service station
- 22: Module 2 of service station
- 23: Route
- 24: Joint
- 25: Damper
- 26: Ventilator or air conditioning system
- 27: Chassis
- 28: Service slot
- 29: Charging module
- 30: Parking or landing module
- 32: Charging device of service station
- 33: Control module of service station
- 34: Energy module of service station
- 35: Elevator (turn-and -lift device)
- 36: Elevator (turn-and-lift device) shaft
- 37: Elevator (turn-and-lift device) cage
- 38: Rotary actuator for elevator ( turn-and-lift device) shaft
- 39: Lift actuator for elevator (turn-and-lift device) cage
- 40: Vertical axis of elevator (turn-and-lift device)
- 41: Counter weight or constant force spring system
- 42: Payload integrated into motorized unit:
42a - charging device, integrated into motorized unit as its payload
- 43: Communication unit of control module 33 of service station
- 44: Unmanned vehicle motion controller
- 45: Control station
- 46: Docking unit.

## Claims

1. Method for supplying of energy sources to an unmanned vehicle (11), comprising transfer of batteries (2) between slots (28) of the unmanned vehicle (11) and an external charging device (32) and back, with charging thereof in the external charging device, **characterized in**:
- integrating the batteries (2) into motorized units (1), which are designed to autonomously move between the slots (28), enter the slots (28) and leave them;
- where movement of each motorized unit (1) is performed by forming and controlling a path of its motion to the destination slot (28), wherein each path of the motorized unit (1) comprises a sequence of at least two different states, selected from a group, comprising:
- a transit state, in which said motorized unit (1) is being moved between the slots (28);
- a state of alignment, in which the motorized unit (1) is being aligned its position relative to the slot (28), within which it is located;
- a connected state, in which the motorized unit (1) is fixed in the aligned position relative to the slot (28), within which it is located, and possibility of energy transfer between an energy circuit of the slot (28) concerned and the batteries (2) integrated into the motorized unit (1) is provided; and
- a fixed disconnected state, in which the non-moving motorized unit (1) in the disconnected state is present; wherein the motorized unit (1) ends its path in the connected or fixed disconnected state in the destination slot (28);
- providing the unmanned vehicle (11) with energy sources is performed by at least one motorized unit (1) with fully or partially charged batteries (2) integrated into it, and which motorized unit (1) is in connected state in the slot (28) of the unmanned vehicle (11);
- charging of the integrated batteries (2) is performed in the motorized unit (1), which motorized unit (1) is in connected state in one of the slots (28) of the charging device (32), being the device external relative to the unmanned vehicle.

2. The method according to claim 1, **characterized in** using of part of energy of the batteries (2), integrated into the motorized unit (1) being in any of the states, and/or part of energy supplied from the charging device device (32) to the motorized unit (1) being in the connected state in the slot (28) of the charging device (32), for ensuring of functioning of the motorized unit (1) itself.

3. The method according to claim 1 or 2, **characterized in** grouping of one or more external charging devices (32) within a service station, where each of the charging devices (32) of the service station might be configured to comprise one or more slots (28), and where more than one motorized unit (1) can be located within the service station, wherein more than one motorized unit (1) can be located in any of said states simultaneously

4. The method according to claim 3, **characterized in** providing the motorized units (1) of one service station for not less than one unmanned vehicle (11), which unmanned vehicle (11) are also able to transfer the motorized units (1) from one service station to another one.

5. The method according to claim 4, **characterized in** providing of accessibility of at least one motorized unit (1) with the charged batteries (2), integrated therein, for each of the serviced unmanned vehicles (11).

6. The method according to any one of preceding claims, **characterized in that** along with the batteries (2) the motorized units (1) are able to transfer a payload (42, 42a) integrated therein

7. The method according to any one of preceding claims, **characterized in** integrating of payload, (42a) designed for operation of module(s) of the service station, into the motorized unit (1), and transferring said payload by the unmanned vehicle from one service station to another one.

8. The method according to any one of preceding claims, **characterized in** equipping the unmanned vehicle (11) with two or more slots (28), in which motorized units (1) can be in the connected state.

9. The method according to any one of preceding claims, **characterized in** equipping the motorized unit (1) and/or the service station with means for determining location of the motorized unit within the service station, in order to form the path, and performing a contactless information exchange between the motorized unit(s) and means (34, 43) of control of the service station and/or other motorized units within said service station, and using information obtained therefrom for both determining the location of the motorized unit and for tracking dynamics of passage by motorized unit of its path, and, optionally, supplementing the information on location of the motorized unit with other information on the actual state of the motorized unit, for example, with the information on energy level in the integrated batteries.

10. The method according to claim 9, **characterized in** forming the paths of the motorized units (1) in a centralized manner, for example, by control means (34, 43) of the service station, based on the information on the state(s) of the motorized unit(s) (1) of the service station, obtained in the process of centralized information exchange, for example, of type "control means of service station - motorized unit", or in forming the paths of the motorized unit in a decentralized manner by the motorized units themselves by proper following given traffic rules, taking into account the information on the actual state of the motorized units of the service station, obtained in the process of group information exchange of type "motorized unit - motorized unit" and/or "control means of service station - motorized unit", and further adjusting the path on a basis of the information on the actual states of the motorized units of the service station, obtained in the process of centralized and/or decentralized information exchange.

11. The method according to any one of preceding claims, **characterized in** additional locating the slots (28), in which the motorized unit (1) can be in the connected state or in the fixed disconnected state, in nodes of the service station, defining for them a purpose other than supplying energy, including storage of the motorized units, diagnostics thereof and servicing of the payload (42, 42a).

12. The method according to any one of preceding claims, **characterized in** arranging the slots (28), between which the motorized unit (1) is being moved, within one and the same horizontal plane, or in arranging the slots, between which the motorized unit is being moved, in several horizontal planes with the possibility of transferring the motorized unit from any of the horizontal planes to any another one, wherein arranging the slots of each horizontal plane is performed in an order, providing for a rectilinear motion of the motorized unit between them with possible turning from one rectilinear direction to the another one.

13. The method according to claim 12, **characterized in** performing of said turning of the motorized unit (1) and/or vertical transfer to other horizontal plane, optimally, by using a turn-and-lift device (35), for which purpose the service station is equipped with one or more of such device(s).

14. The method according to any one of preceding claims, **characterized in that** group of states of the motorized unit is further comprising an emergency state, in which the motorized unit (1) is unable to perform autonomous motion, alignment and/or setting into the connected state, or such actions would represent a danger for the service station or the motorized unit in general and/or for its separate parts, wherein the motorized unit in an emergency state can be pushed off the route used for motion by other motorized units, by one or more motorized units that are not in the emergency state.

15. System for supplying of energy sources to an unmanned vehicle by performing the method according to any of claims 1 to 14, comprising the means for transfer of the batteries between the slots of the unmanned vehicle and the charging device, external relative to the unmanned vehicle, and back, wherein the system is comprising stationary or mobile service stations for automatic servicing of and providing the unmanned vehicles with batteries **characterized in that**:
- said unmanned vehicle (11) is optionally an unmanned aerial vehicle;
- said means for transfer are comprising one or more motorized units (1) and a route subsystem of the service station, along which route(s) (23) the motorized units (1) with integrated therein batteries (2) and/or payloads are moving autonomously between the slots;
- each slot is comprising a section of one of the routes (23) of the route subsystem; wherein for moving of the motorized unit (1) from one route to the other, the route subsystem being configured in such a manner, that one route (23) is compatible with the other one, and a joint (24) of both routes (23) is passable for the motorized units (1), wherein route subsystem is optionally further comprising the routes containing no slots, used for connection of the routes containing the slots and/or for provision of accessibility of any slot of the system by at least one motorized unit (1).

16. The system according to claim 15, **characterized in that** said service stations are modular, with possibility of combining the modules, each of which is ensuring continuity of the route subsystem, wherein said service station is comprising at least a control module (33), an energy module (34), a parking or landing module (30), a charging module (29), a chassis (27) and wherein the control module (33) is comprising a communication unit (43) for communication with a control station (45), with the unmanned vehicles and, optimally, with the motorized units (1), and said module is able to control motion of the motorized unit(s) (1) on the routes (23) of the route subsystem, using the means for determining of location.

17. The system according to any one of claims 15 to 16, **characterized in that** the route subsystem is consisting of one or more horizontal routes (23) located on one or several horizontal levels, wherein the routes (23) of one level of the route subsystem are straight and parallel to each other and/or angled to each other, for example, at a right angle, and wherein each route (23) of the route subsystem is optimally representing a pair of rails (6) of fixed gauge, located within the same horizontal plane.

18. The system according to any one of claims 15 to 17, **characterized in that** the route subsystem is comprising one or more turn-and-lift devices (35), configured for change of direction and/or change of horizontal level of motion of the motorized unit (1) by means of turning and/or vertical transfer of the motorized unit together with the section of the route in the route subsystem.

19. The system according to claim 18, **characterized in that** the turn-and-lift device (35) is installed at crossing of the routes (23) of the route subsystem and is comprising:
- shaft (36), on a vertical axis (40) of which points of crossing of the routes (23) for at least two levels of the horizontal routes are disposed;
- cage (37), comprising the section of the route with the service slot (28), and designed for pivoting about the vertical axis (40) and/or for vertical transfer inside of the shaft (36) between different levels of the routes (23);
- set of sensors, ensuring proper positioning of the cage (37) relative to the routes (23) leading to the turn-and-lift device;
- rotary actuator (38) for the shaft, designed for turning the shaft (36) with the cage (37);
- lift actuator (39) for the cage, designed for vertical transfer of the cage (37) inside the shaft (36) between the routes (23) of different levels.

20. The system according to any one of claims 15 to 19, **characterized in that** the routes (23) of the route subsystem are also suitable for simultaneous and independent motion of the payloads (20) of the unmanned vehicle(s), which payloads are not integrated into the motorized units (1), wherein, optimally, the payload (20), not integrated into the motorized unit, is using an outer part of the rails (6) of the routes (23) of the route subsystem for its motion along the routes (23) of the route subsystem.

21. The system according to any one of claims 15-20, **characterized in that** said motorized units (1) are comprising a load carrying platform (12), upon which there are installed at least:
- batteries (2) and, optionally, the payload (42);
- one or more docking units (46), designed for transportation of energy between the batteries (2) and the energy circuit of the slot (28);
- one or more wheel drives (3), each driving one or several traction wheels (4), installed either on a platform (12) or upon the wheel drive (3) itself and ensuring motion of the motorized unit (1) along the route (23) of the route subsystem;
- control means, for example, a control unit (9), which is controlling the autonomous motion of the motorized unit (1) by controlling the wheel drives (3), and docking unit(s) (46).

22. The system according to claim 21, **characterized in that** the platform (12) of the motorized unit (1) is further equipped with one or more passive wheels (5), with a help of which the motorized unit (1) is resting on the routes (23) of the route subsystem, wherein, optimally, the motorized unit (1) is located between rails (6) of the routes (23) of the route subsystem and is supported by its passive wheels (5) on an upper inner part of the rails (6), while traction wheels (4) are pressed to a lower inner part of the rails (6).

23. The system according to claims 21 to 22, **characterized in that** the platform (12) of the motorized unit (1) is further equipped with guide elements (8), designed to simplify an alignment of the motorized unit (1) in parallel to the route (23), and/or with limit stops, restricting freedom of motion within the plane, which is perpendicular relative to the plane of the route (23).

24. The system according to any one of claims 21 to 23, **characterized in that** said docking unit (46) of the motorized unit is comprising a system port (14) with two or more electric contacts (16) located on it; and a motorized clamping actuator (13) setting the system port (14) into motion, perpendicular relative to a direction of the route (23), and designed to ensure proper fixation of the motorized unit within the slot (28) in the connected state, wherein said system port (14) of the docking unit (46) is comprising a mechanical aligning element (15), designed to ensure proper positioning of the electric contacts (16) relative to the electric contacts of the corresponding system port (14) of the slot (28) and/or reliable mechanical fixation of the motorized unit (1) on the section of the route (23) of the slot (28).

25. The system according to any one of claims 15 to 24, **characterized in that** the motorized unit (1) is equipped with built-in or external communication unit(s) (10), providing for contactless communication with the devices and systems, which are external relative to the motorized unit.

26. The system according to any one of claims 15 to 25, **characterized in that** the motorized unit (1) is equipped with built-in or external means for determining its absolute and/or relative location within the route subsystem, such as tracking sensors or position sensors.

27. The system according to any one of claims 15 to 26, **characterized in that** on a route section within the unmanned vehicle more than one slot are located for possibility of transfer by the unmanned vehicle (11) of not less than one motorized unit (1) with integrated payload (42) in addition to the motorized unit (1) with integrated batteries (2), supplying energy for the unmanned vehicle itself, wherein the payload integrated into the motorized unit (1a) is optionally a charging device (42a) of charging module (29) and/or control module (33) of the service station.

## Patentansprüche

1. Verfahren zum Liefern von Energiequellen zu einem unbemannten Fahrzeug (11), umfassend einen Transfer von Batterien (2) zwischen Schächten (28) des unbemannten Fahrzeugs (11) und einer externen Ladevorrichtung (32) und zurück, mit Laden davon in der externen Ladevorrichtung, **gekennzeichnet durch:**
- Integrieren der Batterien (2) in motorisierte Einheiten (1), die dazu ausgestaltet sind, sich autonom zwischen den Schächten (28) zu bewegen, in die Schächte (28) einzutreten und diese zu verlassen;
- wobei eine Bewegung jeder motorisierten Einheit (1) durch Bilden und Steuern eines Pfads ihrer Bewegung zu dem Zielschacht (28) durchgeführt wird, wobei jeder Pfad der motorisierten Einheit (1) eine Abfolge von mindestens zwei unterschiedlichen Zuständen umfasst, die ausgewählt sind aus einer Gruppe, umfassend:
- einen Übergangszustand, in dem die motorisierte Einheit (1) zwischen den Schächten (28) bewegt wird;
- einen Ausrichtungszustand, in dem die motorisierte Einheit (1) in ihre Position relativ zu dem Schacht (28), in dem sie sich befindet, ausgerichtet wird;
- einen verbundenen Zustand, in dem die motorisierte Einheit (1) in der ausgerichteten Position relativ zu dem Schacht (28), in dem sie sich befindet, fixiert wird, und eine Möglichkeit eines Energietransfers zwischen einem Energiekreis des betreffenden Schachts (28) und den in die motorisierte Einheit (1) integrierten Batterien (2) bereitgestellt wird; und
- einen fixierten, getrennten Zustand, in dem die sich nicht bewegende motorisierte Einheit (1) in dem getrennten Zustand vorhanden ist;
wobei die motorisierte Einheit (1) ihren Pfad in dem verbunden oder fixierten, getrennten Zustand in dem Zielschacht (28) beendet;
- wobei das Bereitstellen von Energiequellen zu dem unbemannten Fahrzeug (11) durch mindestens eine motorisierte Einheit (1) mit vollständig oder teilweise geladenen darin integrierten Batterien (2) durchgeführt wird, und wobei sich die motorisierte Einheit (1) in dem verbunden Zustand in dem Schacht (28) des unbemannten Fahrzeugs (11) befindet;
- wobei das Laden der integrierten Batterien (2) in der motorisierten Einheit (1) durchgeführt wird, wobei sich die motorisierte Einheit (1) in dem verbunden Zustand in einem der Schächte (28) der Ladevorrichtung (32) befindet, die die Vorrichtung extern relativ zu dem unbemannten Fahrzeug ist.

2. Verfahren nach Anspruch 1, **gekennzeichnet durch** Verwenden eines Teils einer Energie der Batterien (2), die in die motorisierte Einheit (1) integriert sind, die sich in einem beliebigen der Zustände befindet, und/oder eines Teils einer Energie, die von der Ladevorrichtungsvorrichtung (32) zu der motorisierten Einheit (1) geliefert wird, die sich in dem verbunden Zustand in dem Schacht (28) der Ladevorrichtung (32) befindet, zum Sicherstellen eines Funktionierens der motorisierten Einheit (1) selbst.

3. Verfahren nach Anspruch 1 oder 2, **gekennzeichnet durch** Gruppieren einer oder mehrerer externer Ladevorrichtungen (32) in einer Wartungsstation, wobei jede der Ladevorrichtungen (32) der Wartungsstation dazu ausgelegt sein könnte, einen oder mehrere Schächte (28) zu umfassen, und wobei sich mehr als eine motorisierte Einheit (1) in der Wartungsstation befinden kann, wobei sich mehr als eine motorisierte Einheit (1) in beliebigen der Zustände gleichzeitig befinden kann.

4. Verfahren nach Anspruch 3, **gekennzeichnet durch** Bereitstellen der motorisierten Einheiten (1) einer Wartungsstation für nicht weniger als ein unbemanntes Fahrzeug (11), wobei das unbemannte Fahrzeug (11) auch in der Lage sind, die motorisierten Einheiten (1) von einer Wartungsstation zu einer anderen zu transferieren.

5. Verfahren nach Anspruch 4, **gekennzeichnet durch** Bereitstellen einer Zugreifbarkeit mindestens einer motorisierten Einheit (1) mit den darin integrierten geladenen Batterien (2) für jedes der gewarteten unbemannten Fahrzeuge (11).

6. Verfahren nach einem der vorhergehenden Ansprüche, **dadurch gekennzeichnet, dass** zusammen mit den Batterien (2) die motorisierten Einheiten (1) in der Lage sind, eine darin integrierte Nutzlast (42, 42a) zu transferieren.

7. Verfahren nach einem der vorhergehenden Ansprüche, **gekennzeichnet durch** Integrieren einer Nutzlast (42a), die für einen Betrieb von Modul(en) der Wartungsstation ausgestaltet ist, in die motorisierte Einheit (1), und Transferieren der Nutzlast durch das unbemannte Fahrzeug von einer Wartungsstation zu einer anderen.

8. Verfahren nach einem der vorhergehenden Ansprüche, **gekennzeichnet durch** Ausrüsten des unbemannten Fahrzeugs (11) mit zwei oder mehr Schächten (28), in denen sich motorisierte Einheiten (1) in dem verbunden Zustand befinden können.

9. Verfahren nach einem der vorhergehenden Ansprüche, **gekennzeichnet durch** Ausrüsten der motorisierten Einheit (1) und/oder der Wartungsstation mit Mitteln zum Bestimmen einer Position der motorisierten Einheit in der Wartungsstation, um den Pfad zu bilden, und Durchführen eines kontaktlosen Informationsaustauschs zwischen der/den motorisierten Einheit(en) und Mitteln (34, 43) zum Steuern der Wartungsstation und/oder anderer motorisierter Einheiten in der Wartungsstation, und Verwenden von daraus erhaltenen Informationen zum Bestimmen der Position der motorisierten Einheit und zum Nachverfolgen einer Dynamik eines Durchlaufens ihres Pfads durch die motorisierte Einheit, und optional Ergänzen der Informationen zur Position der motorisierten Einheit mit anderen Informationen zum tatsächlichen Zustand der motorisierten Einheit, zum Beispiel mit den Informationen zum Energieniveau in den integrierten Batterien.

10. Verfahren nach Anspruch 9, **gekennzeichnet durch** Bilden der Pfade der motorisierten Einheiten (1) in einer zentralisierten Weise, zum Beispiel durch Steuermittel (34, 43) der Wartungsstation, basierend auf den Informationen zu dem einen oder den mehreren Zuständen der motorisierten Einheit(en) (1) der Wartungsstation, die in dem Prozess eines zentralisierten Informationsaustauschs zum Beispiel des Typs "Steuermittel einer Wartungsstation - motorisierte Einheit" erhalten wurden, oder durch Bilden der Pfade der motorisierten Einheit in einer dezentralisierten Weise durch die motorisierten Einheiten selbst durch korrektes Befolgen vorgegebener Verkehrsregeln unter Berücksichtigung der Informationen zum tatsächlichen Zustand der motorisierten Einheiten der Wartungsstation, die in dem Prozess eines Gruppeninformationsaustauschs des Typs "motorisierte Einheit - motorisierte Einheit" und/oder "Steuermittel einer Wartungsstation - motorisierte Einheit" erhalten wurden, und ferner Anpassen des Pfads auf Basis der Informationen zu den tatsächlichen Zuständen der motorisierten Einheiten der Wartungsstation, die in dem Prozess eines zentralisierten und/oder dezentralisierten Informationsaustauschs erhalten wurden.

11. Verfahren nach einem der vorhergehenden Ansprüche, **gekennzeichnet durch** zusätzlich Positionieren der Schächte (28), in denen sich die motorisierte Einheit (1) in dem verbunden Zustand oder in dem fixierten, getrennten Zustand befinden kann, in Knoten der Wartungsstation, die einen anderen Zweck für sie als ein Liefern von Energie, einschließlich Lagerung der motorisierten Einheiten, Diagnose davon und Warten der Nutzlast (42, 42a), definieren.

12. Verfahren nach einem der vorhergehenden Ansprüche, **gekennzeichnet durch** Anordnen der Schächte (28), zwischen denen die motorisierte Einheit (1) bewegt wird, in ein und derselben horizontalen Ebene, oder durch Anordnen der Schächte, zwischen denen die motorisierte Einheit bewegt wird, in mehreren horizontalen Ebenen mit der Möglichkeit zum Transferieren der motorisierten Einheit von einer beliebigen der horizontalen Ebenen zu einer beliebigen anderen, wobei ein Anordnen der Schächte jeder horizontalen Ebene in einer Ordnung durchgeführt wird, die eine lineare Bewegung der motorisierten Einheit zwischen ihnen mit einem möglichen Drehen von einer linearen Richtung zur anderen bereitstellt.

13. Verfahren nach Anspruch 12, **gekennzeichnet durch** Durchführen des Drehens der motorisierten Einheit (1) und/oder eines vertikalen Transfers zu einer anderen horizontalen Ebene, optimal durch Verwenden einer Dreh- und Hubvorrichtung (35), wobei zu diesem Zweck die Wartungsstation mit einer oder mehreren solchen Vorrichtung(en) ausgerüstet ist.

14. Verfahren nach einem der vorhergehenden Ansprüche, **dadurch gekennzeichnet, dass** eine Gruppe von Zuständen der motorisierten Einheit ferner einen Notfallzustand umfasst, in dem die motorisierte Einheit (1) nicht in der Lage ist, eine autonome Bewegung, Ausrichtung und/oder Versetzung in den verbundenen Zustand durchzuführen, oder solche Aktionen eine Gefahr für die Wartungsstation oder die motorisierte Einheit im Allgemeinen und/oder für ihre einzelnen Teile darstellen würde, wobei die motorisierte Einheit in einem Notfallzustand von der zur Bewegung verwendeten Route durch andere motorisierte Einheiten, durch eine oder mehrere motorisierte Einheiten, die sich nicht in dem Notfallzustand befinden, weg gedrückt werden kann.

15. System zum Liefern von Energiequellen zu einem unbemannten Fahrzeug durch Durchführen des Verfahrens nach einem der Ansprüche 1 bis 14, umfassend die Mittel zum Transfer der Batterien zwischen den Schächten des unbemannten Fahrzeugs und der Ladevorrichtung extern relativ zu dem unbemannten Fahrzeug und zurück, wobei das System stationäre oder mobile Wartungsstationen zum automatischen Warten von und Bereitstellen von Batterien zu den unbemannten Fahrzeugen umfasst, **dadurch gekennzeichnet, dass**:
- das unbemannte Fahrzeug (11) optional ein unbemanntes Luftfahrzeug ist;
- die Mittel zum Transfer eine oder mehrere motorisierte Einheiten (1) und ein Routensubsystem der Wartungsstation umfassen, wobei sich die motorisierten Einheiten (1) mit darin integrierten Batterien (2) und/oder Nutzlasten entlang dieser Route(n) (23) autonom zwischen den Schächten bewegen;
- jeder Schacht einen Abschnitt einer der Routen (23) des Routensubsystems umfasst; wobei zum Bewegen der motorisierten Einheit (1) von einer Route zur anderen das Routensubsystem derart ausgelegt ist, dass eine Route (23) mit der anderen kompatibel ist, und eine Verbindungsstelle (24) beider Routen (23) für die motorisierten Einheiten (1) passierbar ist, wobei das Routensubsystem optional ferner die Routen umfasst, die keine Schächte enthalten, die zur Verbindung der Routen, die die Schächte enthalten, und/oder zum Vorsehen einer Zugreifbarkeit eines beliebigen Schachts des System durch mindestens eine motorisierte Einheit (1) verwendet werden.

16. System nach Anspruch 15, **dadurch gekennzeichnet, dass** die Wartungsstationen modular mit einer Möglichkeit zum Kombinieren der Module sind, von denen jedes die Durchgängigkeit des Routensubsystems sicherstellt, wobei die Wartungsstation mindestens ein Steuermodul (33), ein Energiemodul (34), ein Park- oder Landemodul (30), ein Lademodul (29), ein Chassis (27) umfasst und wobei das Steuermodul (33) eine Kommunikationseinheit (43) zur Kommunikation mit einer Steuerstation (45), mit den unbemannten Fahrzeugen und, optimal, mit den motorisierten Einheiten (1) umfasst, und das Modul in der Lage ist, eine Bewegung der motorisierten Einheit(en) (1) auf den Routen (23) des Routensubsystems unter Verwendung der Mittel zum Bestimmen der Position zu steuern.

17. System nach einem der Ansprüche 15 bis 16, **dadurch gekennzeichnet, dass** das Routensubsystem aus einer oder mehreren horizontalen Routen (23) besteht, die sich auf einem oder mehreren horizontalen Niveaus befinden, wobei die Routen (23) eines Niveaus des Routensubsystems gerade und parallel zueinander und/oder abgewinkelt zueinander, zum Beispiel in einem rechten Winkel, sind, und wobei jede Route (23) des Routensubsystems optimal ein Paar von Schienen (6) einer festen Spurweite darstellt, die sich in derselben horizontalen Ebene befinden.

18. System nach einem der Ansprüche 15 bis 17, **dadurch gekennzeichnet, dass** das Routensubsystem eine oder mehrere Dreh- und Hubvorrichtungen (35) umfasst, die zum Ändern einer Richtung und/oder Ändern eines horizontalen Niveaus einer Bewegung der motorisierten Einheit (1) mittels Drehen und/oder einem vertikalen Transfer der motorisierten Einheit zusammen mit dem Abschnitt der Route des Routensubsystems ausgelegt sind.

19. System nach Anspruch 18, **dadurch gekennzeichnet, dass** die Dreh- und Hubvorrichtung (35) an einer Kreuzung der Routen (23) des Routensubsystems installiert ist und Folgendes umfasst:
- eine Welle (36), wobei auf einer vertikalen Achse (40) davon Punkte einer Kreuzung der Routen (23) für mindestens zwei Niveaus der horizontalen Routen angeordnet sind;
- einen Käfig (37), der den Abschnitt der Route mit dem Wartungsschacht (28) umfasst und zum Schwenken um die vertikale Achse (40) und/oder zum vertikalen Transfer in der Welle (36) zwischen unterschiedlichen Niveaus der Routen (23) ausgestaltet ist;
- einen Satz von Sensoren, die eine korrekte Positionierung des Käfigs (37) relativ zu den Routen (23) sicherstellen, die zu der Dreh- und Hubvorrichtung führen;
- einen Drehaktuator (38) für die Welle, der zum Drehen der Welle (36) mit dem Käfig (37) ausgestaltet ist;
- einen Hubaktuator (39) für den Käfig, der zum vertikalen Transfer des Käfigs (37) in der Welle (36) zwischen den Routen (23) unterschiedlicher Niveaus ausgestaltet ist.

20. System nach einem der Ansprüche 15 bis 19, **dadurch gekennzeichnet, dass** die Routen (23) des Routensubsystems auch für eine gleichzeitige und unabhängige Bewegung der Nutzlasten (20) des einen oder der mehreren unbemannten Fahrzeuge geeignet sind, wobei die Nutzlasten nicht in die motorisierten Einheiten (1) integriert sind, wobei, optimal, die nicht in die motorisierte Einheit integrierte Nutzlast (20) einen äußeren Teil der Schienen (6) der Routen (23) des Routensubsystems für ihre Bewegung entlang der Routen (23) des Routensubsystems verwendet.

21. System nach einem der Ansprüche 15-20, **dadurch gekennzeichnet, dass** die motorisierten Einheiten (1) eine lasttragende Plattform (12) umfassen, auf der mindestens Folgendes installiert ist:
- Batterien (2) und, optional, die Nutzlast (42);
- eine oder mehrere Andockeinheiten (46), die zum Transportieren von Energie zwischen den Batterien (2) und dem Energiekreis des Schachts (28) ausgestaltet sind;
- einen oder mehrere Radantriebe (3), die jeweils ein oder mehrere Traktionsräder (4) antreiben, die entweder auf einer Plattform (12) oder auf dem Radantrieb (3) selbst installiert sind und eine Bewegung der motorisierten Einheit (1) entlang der Route (23) des Routensubsystems sicherstellen;
- Steuermittel, zum Beispiel eine Steuereinheit (9), die die autonome Bewegung der motorisierten Einheit (1) durch Steuern der Radantriebe (3) und Andockeinheit(en) (46) steuert.

22. System nach Anspruch 21, **dadurch gekennzeichnet, dass** die Plattform (12) der motorisierten Einheit (1) ferner mit einem oder mehreren passiven Rädern (5) ausgerüstet ist, mit deren Hilfe die motorisierte Einheit (1) auf den Routen (23) des Routensubsystems ruht, wobei, optimal, die motorisierte Einheit (1) sich zwischen Schienen (6) der Routen (23) des Routensubsystems befindet und durch ihre passiven Räder (5) auf einem oberen inneren Teil der Schienen (6) gelagert ist, während Traktionsräder (4) an einen unteren inneren Teil der Schienen (6) gedrückt werden.

23. System nach Ansprüchen 21 bis 22, **dadurch gekennzeichnet, dass** die Plattform (12) der motorisierten Einheit (1) ferner mit Führungselementen (8), die dazu ausgestaltet sind, eine Ausrichtung der motorisierten Einheit (1) parallel zu der Route (23) zu vereinfachen, und/oder mit Begrenzungsanschlägen, die eine Bewegungsfreiheit in der Ebene einschränken, die senkrecht relativ zu der Ebene der Route (23) ist, ausgerüstet ist.

24. System nach einem der Ansprüche 21 bis 23, **dadurch gekennzeichnet, dass** die Andockeinheit (46) der motorisierten Einheit einen Systemanschluss (14) mit zwei oder mehr darauf befindlichen elektrischen Kontakten (16); und einen motorisierten Klemmaktuator (13) umfasst, der den Systemanschluss (14) in Bewegung senkrecht relativ zu einer Richtung der Route (23) versetzt und dazu ausgestaltet ist, eine korrekte Fixierung der motorisierten Einheit in dem Schacht (28) in dem verbunden Zustand sicherzustellen, wobei der Systemanschluss (14) der Andockeinheit (46) ein mechanisches Ausrichtungselement (15) umfasst, das dazu ausgestaltet ist, eine korrekte Positionierung der elektrischen Kontakte (16) relativ zu den elektrischen Kontakten des entsprechenden Systemanschlusses (14) des Schachts (28) und/oder eine zuverlässige mechanische Fixierung der motorisierten Einheit (1) auf dem Abschnitt der Route (23) des Schachts (28) sicherzustellen.

25. System nach einem der Ansprüche 15 bis 24, **dadurch gekennzeichnet, dass** die motorisierte Einheit (1) mit einer oder mehreren eingebauten oder externen Kommunikationseinheiten (10) ausgerüstet ist, die eine kontaktlose Kommunikation mit den Vorrichtungen und Systemen bereitstellen, die extern relativ zu der motorisierten Einheit sind.

26. System nach einem der Ansprüche 15 bis 25, **dadurch gekennzeichnet, dass** die motorisierte Einheit (1) mit eingebauten oder externen Mitteln zum Bestimmen ihrer absoluten und/oder relativen Position in dem Routensubsystem, wie etwa Nachverfolgungssensoren oder Positionssensoren, ausgerüstet ist.

27. System nach einem der Ansprüche 15 bis 26, **dadurch gekennzeichnet, dass** sich auf einem Routenabschnitt in dem unbemannten Fahrzeug mehr als ein Schacht für eine Möglichkeit eines Transfers durch das unbemannte Fahrzeug (11) von nicht weniger als einer motorisierten Einheit (1) mit einer integrierten Nutzlast (42) zusätzlich zu der motorisierten Einheit (1) mit integrierten Batterien (2) befindet, die Energie für das unbemannte Fahrzeug selbst liefern, wobei die in die motorisierte Einheit (1a) integrierte Nutzlast optional eine Ladevorrichtung (42a) eines Lademoduls (29) und/oder eines Steuermoduls (33) der Wartungsstation ist.

## Revendications

1. Procédé de fourniture de sources d'énergie à un véhicule sans pilote (11), comprenant le transfert de batteries (2) entre des rainures (28) du véhicule sans pilote (11) et un dispositif de charge externe (32) et retour, pour leur charge dans le dispositif de charge externe, **caractérisé par** :
l'intégration des batteries (2) dans des unités motorisées (1), qui sont conçues pour se déplacer de façon autonome entre les rainures (28), entrer dans les rainures (28) et les quitter ;
le déplacement de chaque unité motorisée (1) étant exécuté par la formation et la commande d'un trajet de son déplacement vers la rainure de destination (28),
dans lequel chaque trajet de l'unité motorisée (1) comprend une séquence d'au moins deux états différents, choisis parmi un groupe, comprenant :
un état de transition, dans lequel ladite unité motorisée (1) est déplacée entre les rainures (28) ;
un état d'alignement, dans lequel l'unité motorisée (1) est alignée dans une position par rapport à la rainure (28) dans laquelle elle se trouve ;
un état connecté, dans lequel l'unité motorisée (1) est fixée dans la position alignée par rapport à la rainure (28) dans laquelle elle se trouve, et une possibilité est fournie de transfert d'énergie entre un circuit d'énergie de la rainure (28) et les batteries (2) intégrées dans l'unité motorisée (1) ; et
un état déconnecté fixe, dans lequel l'unité motorisée immobile (1) dans l'état déconnecté est présente ;
dans lequel l'unité motorisée (1) termine son trajet dans l'état connecté ou déconnecté fixe dans la rainure de destination (28) ;
la fourniture au véhicule sans pilote (11) de sources d'énergie est exécutée par au moins une unité motorisée (1) au moyen de batteries complètement ou partiellement chargées (2) intégrées dans celle-ci, et ladite unité motorisée (1) est dans l'état connecté dans la rainure (28) du véhicule sans pilote (11) ;
la charge des batteries intégrées (2) est exécutée dans l'unité motorisée (1), ladite unité motorisée étant dans l'état connecté dans l'une des rainures (28) du dispositif de charge (32), qui est le dispositif externe par rapport au véhicule sans pilote.

2. Procédé selon la revendication 1, **caractérisé par** l'utilisation d'une partie de l'énergie des batteries (2) intégrées dans l'unité motorisée (1) dans l'un quelconque des états, et/ou d'une partie de l'énergie fournie depuis le dispositif de charge (32) à l'unité motorisée (1) qui est dans l'état connecté dans la rainure (28) du dispositif de charge (32), pour assurer le fonctionnement de l'unité motorisée (1) elle-même.

3. Procédé selon la revendication 1 ou 2, **caractérisé par** le regroupement d'un ou plusieurs dispositifs de charge externes (32) dans une station-service, chacun des dispositifs de charge (32) de la station-service pouvant être configuré pour comprendre une ou plusieurs rainures (28), et plusieurs unités motorisées (1) pouvant être situées dans la station-service, dans lequel plusieurs unités motorisées (1) peuvent se trouver simultanément dans l'un quelconque desdits états.

4. Procédé selon la revendication 3, **caractérisé par** la fourniture des unités motorisées (1) d'une station-service à au moins un véhicule sans pilote (11), ledit véhicule sans pilote (11) étant également apte à transférer les unités motorisées (1) d'une station-service à une autre.

5. Procédé selon la revendication 4, **caractérisé par** la fourniture de l'accessibilité à au moins une unité motorisée (1) contenant les batteries chargées (2) intégrées à l'intérieur, à chacun des véhicules sans pilote servis (11).

6. Procédé selon l'une quelconque des revendications précédentes, **caractérisé en ce que** en même temps que les batteries (2), les unités motorisées (1) sont aptes à transférer une charge utile (42, 42a) intégrée à l'intérieur.

7. Procédé selon l'une quelconque des revendications précédentes, **caractérisé par** l'intégration d'une charge utile (42a), conçue pour le fonctionnement du ou des modules de la station-service, dans l'unité motorisée (1), et le transfert de ladite charge utile par le véhicule sans pilote d'une station-service à une autre.

8. Procédé selon l'une quelconque des revendications précédentes, **caractérisé par** l'équipement du véhicule sans pilote (11) avec au moins deux rainures (28), dans lesquelles les unités motorisées (1) peuvent être dans l'état connecté.

9. Procédé selon l'une quelconque des revendications précédentes, **caractérisé par** l'équipement de l'unité motorisée (1) et/ou de la station-service avec des moyens de détermination de la position de l'unité motorisée dans la station-service, afin de former le trajet, et l'exécution d'un échange d'informations sans contact entre la ou les unités motorisées et des moyens (34, 43) de commande de la station-service et/ou d'autres unités motorisées dans ladite station-service, et l'utilisation des informations ainsi obtenues à la fois pour déterminer la position de l'unité motorisée et pour suivre la dynamique du passage de l'unité motorisée sur son trajet, et facultativement, compléter les informations sur la position de l'unité motorisée par d'autres informations sur l'état actuel de l'unité motorisée, par exemple par des informations sur le niveau d'énergie dans les batteries intégrées.

10. Procédé selon la revendication 9, **caractérisé par** la formation des trajets des unités motorisées (1) de manière centralisée, par exemple, par des moyens de commande (34, 43) de la station-service, sur la base des informations sur le ou les états de la ou des unités motorisées (1) de la station-service, obtenues lors du processus d'échange d'informations centralisé, par exemple de type « moyens de commande de la station-service - unité motorisée », ou par la formation des trajets de l'unité motorisée de manière décentralisée par les unités motorisées elles-mêmes par un suivi correct de règles de trafic données, en tenant compte des informations sur l'état actuel des unités motorisées de la station-service, obtenues lors du processus d'échange d'informations groupé de type « unité motorisée - unité motorisée » et/ou « moyens de commande de la station-service - unité motorisée », et en outre par l'ajustement du trajet sur la base des informations sur les états actuels des unités motorisées de la station-service, obtenues lors du processus d'échange d'informations centralisé et/ou décentralisé.

11. Procédé selon l'une quelconque des revendications précédentes, **caractérisé par** un positionnement supplémentaire des rainures (28) dans lesquelles l'unité motorisée (1) peut se trouver dans l'état connecté ou dans l'état déconnecté fixe, dans des noeuds de la station-service, la définition pour elles d'un objectif autre que la fourniture d'énergie, comprenant le stockage des unités motorisées, leur diagnostic et le service de la charge utile (42, 42a).

12. Procédé selon l'une quelconque des revendications précédentes, **caractérisé par** l'agencement des rainures (28) entre lesquelles l'unité motorisée (1) est déplacée en un seul et même plan horizontal, ou par l'agencement des rainures entre lesquelles l'unité motorisée est déplacée en plusieurs plans horizontaux avec la possibilité de transférer l'unité motorisée de l'un quelconque des plans horizontaux à un quelconque autre, dans lequel l'agencement des rainures de chaque plan horizontal est exécuté dans un ordre, permettant un déplacement rectiligne de l'unité motorisée entre eux avec un changement possible d'une direction rectiligne à l'autre.

13. Procédé selon la revendication 12, **caractérisé par** l'exécution dudit changement de l'unité motorisée (1) et/ou son transfert vertical vers un autre plan horizontal de façon optimale au moyen d'un dispositif de levage en rotation (35), la station-service étant équipée à cette fin d'un ou plusieurs de ces dispositifs.

14. Procédé selon l'une quelconque des revendications précédentes, **caractérisé en ce que** le groupe d'états de l'unité motorisée comprend en outre un état d'urgence, dans lequel l'unité motorisée (1) est inapte à exécuter un déplacement autonome, un alignement et/ou un placement dans l'état connecté, ou ces actions représenteraient un danger pour la station-service ou l'unité motorisée en général et/ou pour ses parties séparées, dans lequel l'unité motorisée dans un état d'urgence peut être poussée hors de la trajectoire utilisée pour le déplacement par d'autres unités motorisées, par une ou plusieurs unités motorisées qui ne se trouvent pas dans l'état d'urgence.

15. Système de fourniture de sources d'énergie à un véhicule sans pilote par l'exécution du procédé selon l'une quelconque des revendications 1 à 14, comprenant les moyens de transfert des batteries entre les rainures du véhicule sans pilote et le dispositif de charge externe au véhicule sans pilote, et retour, dans lequel le système comprend des stations-service fixes ou mobiles pour le service automatique et la fourniture de batteries aux véhicules sans pilote, **caractérisé en ce que** :
ledit véhicule sans pilote (11) est facultativement un véhicule aérien sans pilote ;
lesdits moyens de transfert comprennent une ou plusieurs unités motorisées (1) et un sous-système de trajectoire de la station-service, le long duquel une ou des trajectoires (23) des unités motorisées (1) avec des batteries (1) et/ou des charges utiles intégrées à l'intérieur se déplacent de façon autonome entre les rainures ;
chaque rainure comprend une section de l'une des trajectoires (23) du sous-système de trajectoire ; dans lequel pour déplacer l'unité motorisée (1) d'une trajectoire à une autre, le sous-système est configuré de telle sorte que, une trajectoire est compatible avec l'autre, et une jonction (24) des deux trajectoires (23) peut être franchie par les unités motorisées (1), dans lequel le sous-système de trajectoire comprend en outre facultativement les trajectoires ne contenant aucune rainure, utilisées pour la liaison des trajectoires contenant les rainures et/ou pour la fourniture de l'accessibilité de toute rainure du système à au moins une unité motorisée (1).

16. Système selon la revendication 15, **caractérisé en ce que** lesdites stations-service sont modulaires, avec la possibilité de combiner les modules, chacun assurant la continuité du sous-système de trajectoire, dans lequel ladite station-service comprend au moins un module de commande (33), un module d'énergie 34), un module de parking ou d'atterrissage (30), un module de charge (29), un châssis (27) et dans lequel le module de commande (33) comprend une unité de communication (43) pour la communication avec une station de commande (45), avec les véhicules sans pilote et facultativement avec les unités motorisées (1), et ledit module est apte à commander le déplacement de la ou des unités motorisées (1) sur les trajectoires (23) du sous-système de trajectoire, à l'aide des moyens de détermination de la position.

17. Système selon l'une quelconque des revendications 15 à 16, **caractérisé en ce que** le sous-système de trajectoire consiste en une ou plusieurs trajectoires horizontales (23) situées sur un ou plusieurs niveaux horizontaux, dans lequel les trajectoires (23) d'un niveau du sous-système de trajectoire sont droites et parallèles les unes aux autres et/ou inclinées les unes par rapport aux autres, par exemple à angle droit, et dans lequel chaque trajectoire (23) du sous-système de trajectoire représente de façon optimale une paire de rails (6) de gabarit fixe situés dans le même plan horizontal.

18. Système selon l'une quelconque des revendications 15 à 17, **caractérisé en ce que** le sous-système de trajectoire comprend un ou plusieurs dispositifs de levage en rotation (35) configurés pour changer la direction et/ou changer le niveau horizontal de déplacement de l'unité motorisée (1) au moyen d'un transfert en rotation et/ou vertical de l'unité motorisée en même temps que la section de la trajectoire dans le sous-système de trajectoire.

19. Système selon la revendication 18, **caractérisé en ce que** le dispositif de levage en rotation (35) est installé au croisement des trajectoires (23) du sous-système de trajectoire et comprend :
un arbre (36) sur un axe vertical (40) sur lequel des points de croisement des trajectoires (23) pour au moins deux niveaux de trajectoires horizontales sont disposés ;
une cage (37), comprenant la section de la trajectoire comportant la rainure de service (28), et conçue pour pivoter autour de l'axe vertical (40) et/ou pour le transfert vertical à l'intérieur de l'arbre (36) entre différents niveaux de trajectoires (23) ;
un jeu de capteurs assurant un positionnement correct de la cage (37) par rapport aux trajectoires (23) menant au dispositif de levage en rotation ;
un actionneur rotatif (38) pour l'arbre, conçu pour faire tourner l'arbre (36) avec la cage (37) ;
un actionneur de levage (39) pour la cage, conçu pour le transfert vertical de la cage (37) à l'intérieur de l'arbre (36) entre les trajectoires (23) de différents niveaux.

20. Système selon l'une quelconque des revendications 15 à 19, **caractérisé en ce que** les trajectoires (23) du sous-système de trajectoire sont également conçues pour un déplacement simultané et indépendant des charges utiles (20) du ou des véhicules sans pilote, lesdites charges utiles n'étant pas intégrées dans les unités motorisées (1), dans lequel facultativement, la charge utile (20) non intégrée dans l'unité motorisée utilise une partie externe des rails (6) des trajectoires (23) du sous-système de trajectoire pour son déplacement le long des trajectoires (23) du sous-système de trajectoire.

21. Système selon l'une quelconque des revendications 15 à 20, **caractérisé en ce que** lesdites unités motorisées (1) comprennent une plateforme de port de charge (12), sur laquelle sont installés au moins :
des batteries (2) et facultativement la charge utile (42) ;
une ou plusieurs unités de charge (46) conçues pour le transport d'énergie entre les batteries (2) et le circuit d'énergie de la rainure (28) ;
une ou plusieurs transmissions (3), entraînant chacune une ou plusieurs roues de traction (4), installées soit sur une plateforme (12), soit sur la transmission (3) elle-même et assurant le déplacement de l'unité motorisée (1) le long de la trajectoire (23) du sous-système de trajectoire ;
des moyens de commande, par exemple une unité de commande (9), qui commande le déplacement autonome de l'unité motorisée (1) par la commande des transmissions (3) et de la ou des unités de charge (46).

22. Système selon la revendication 21, **caractérisé en ce que** la plateforme (12) de l'unité motorisée (1) est en outre équipée d'une ou plusieurs roues passives (5) à l'aide desquelles l'unité motorisée (1) repose sur les trajectoires (23) du sous-système de trajectoire, dans lequel de façon optimale, l'unité motorisée (1) est située entre des rails (6) des trajectoires (23) du sous-système de trajectoire et est supportée par ses roues passives (5) sur une partie interne supérieure des rails (6), tandis que les roues de traction (4) sont pressées sur une partie interne inférieure des rails (6).

23. Système selon les revendications 21 à 22, **caractérisé en ce que** la plateforme (12) de l'unité motorisée (1) est en outre équipée d'éléments de guidage (8) conçus pour simplifier un alignement de l'unité motorisée (1) parallèlement à la trajectoire (23), et/ou de butées de limite, restreignant la liberté de mouvement dans le plan qui est perpendiculaire au plan de la trajectoire (23).

24. Système selon l'une quelconque des revendications 21 à 23, **caractérisé en ce que** ladite unité de charge (46) de l'unité motorisée comprend un port de système (14) ayant au moins deux contacts électriques (16) situés sur lui ; et un actionneur de serrage motorisé (13) plaçant le port de système (14) en mouvement, perpendiculairement à une direction de la trajectoire (23), et conçu pour assurer une fixation correcte de l'unité motorisée dans la rainure (28) dans l'état connecté, dans lequel ledit port de système (14) de l'unité de charge (46) comprend un organe d'alignement mécanique (15) conçu pour assurer un positionnement correct des contacts électriques (16) par rapport aux contacts électriques du port de système correspondant (14) de la rainure (28) et/ou une fixation mécanique fiable de l'unité motorisée (1) sur la section de la trajectoire (23) de la rainure (28).

25. Système selon l'une quelconque des revendications 15 à 24, **caractérisé en ce que** l'unité motorisée (1) est équipée d'une ou plusieurs unités de communication intégrées ou externes (10), fournissant une communication sans contact avec les dispositifs et les systèmes qui sont à l'extérieur de l'unité motorisée.

26. Système selon l'une quelconque des revendications 15 à 25, **caractérisé en ce que** l'unité motorisée (1) est équipée de moyens intégrés ou externes permettant de déterminer sa position absolue et/ou relative à l'intérieur du sous-système de trajectoire, tels que des capteurs de suivi ou des capteurs de position.

27. Système selon l'une quelconque des revendications 15 à 26, **caractérisé en ce que** sur une section de trajectoire à l'intérieur du véhicule sans pilote, plusieurs rainures sont situées pour une possibilité de transfert par le véhicule sans pilote (11) d'au moins une unité motorisée (1) ayant une charge utile intégrée (42) en plus de l'unité motorisée (1) ayant des batteries intégrées (2), fournissant de l'énergie pour le véhicule sans pilote lui-même, dans lequel la charge utile intégrée dans l'unité motorisée (1a) est facultativement un dispositif de charge (42a) d'un module de charge (29) et/ou un module de commande (33) de la station-service.
